# EUROPEAN PATENT APPLICATION

(11) **EP 2 085 895 A1**
(43) Date of publication of application: **05.08.2009**
(21) Application number: 09153818.1
(22) Date of filing: 25.01.2002
(51) Int. Cl.: G06F 17/30

(54) **Apparatus, method and system for multiple resolution affecting information access**

(30) Priority: 25.01.2001 US 264333 P; 08.02.2001 US 267875 P; 09.02.2001 US 267899 P; 12.02.2001 US 268766 P; 21.02.2001 US 270473 P; 16.03.2001 US 276459 P; 29.03.2001 US 279792 P; 10.07.2001 US 303768 P; 09.10.2001 US 328275 P; 09.10.2001 US 328274 P; 09.10.2001 US 328270 P
(62) Divisional of application: 02718881.2
(71) Applicant: Content Directions, Inc., Brooklyn NY 11215 (US)
(72) Inventor: Sidman, David, Brooklyn, NY 11215 (US)
(74) Representative: Fennell, Gareth Charles

(57) **Abstract**

An apparatus, method and system to provide a persistent identifier of information that may be located in multiple locations, formats, and accessible in variable fashions based on the context of use. The present disclosure further provides the ability to associate a single identifier with information available, and accessible under varying conditions, from varying locations, in varying formats, based on various contexts of access. The present disclosure further teaches an enhanced digital object identifier, an enhanced handle system, and enhanced directory registry that facilitate the access and association of information over a communications network.

## Description

### RELATED APPLICATIONS

The instant application hereby claims priority to the following US provisional patent applications: (1) serial number 60/264,333 for "Reference Linking with DOIs" filed on January 25, 2001 (attorney docket number 4188-4001); (2) serial number 60/268,766 for "Apparatus, Method, and System for Multiple Resolution Affecting Information Access" filed on February 14, 2001 (attorney docket number 4188-4002); (3) serial number 60/276,459 for "Apparatus, Method, and System for Registration Effecting Information Access" filed on March 16, 2001 (attorney docket number 4188-4003); (4) serial number 60/279,792 for "Apparatus, Method and System For Directory Quality Assurance" filed on March 29, 2001 (attorney docket number 4188-4004); (5) serial number 60/303,768 for "Apparatus, Method, and System for Accessing Digital Rights Management Information" filed on July 10, 2001 (attorney docket number 4188-4005); (6) serial number 60/328,275 for "Apparatus, Method and System For Accessing Digital Rights Management Information" filed on October 9, 2001 (attorney docket number 4188-4005US1); (7) serial number 60/267,875 for "Apparatus, Method, and System for Accessing Information" filed on February 8, 2001 (attorney docket number 4188-4006); (8) serial number 60/267,899 for "Provisional filing for Apparatus, Method, and System for Accessing Information" filed on February 9, 2001 (attorney docket number 4188-4007); (9) serial number 60/270,473 for "Business Value and Implementation Considerations For The DOI" filed on February 21, 2001 (attorney docket number 4188-4008); (10) serial number 60/328,274 for "Apparatus, Method And System For Effecting Information Access In A Peer Environment" filed on October 9, 2001 (attorney docket number 4188-4010); (11) serial number 60/328,270 for "Apparatus, Method and System For Tracking Information Access" filed on October 9, 2001 (attorney docket number 4188-4011); each of these applications being herein incorporated by reference.

The instant application, also, hereby incorporates by reference the following Patent Cooperation Treaty applications: (12) for an "Apparatus, Method and System For Registration Effecting Information Access" (attorney docket number 4188-4003PC), which was filed on January 25, 2002 in the name of David Sidman; (13) for an "Apparatus, Method and System For Directory Quality Assurance" (attorney docket number 4188-4004PC), which was filed on January 25, 2002 in the name of David Sidman; (14) Apparatus, Method and System For Accessing Digital Rights Management Information" (attorney docket number 4188-4005PC1), which was filed on January 25, 2002 in the name of David Sidman; (15) for an "Apparatus, Method and System For Effecting Information Access in a Peer Environment," (attorney docket number 4188-4010PC), which was filed on January 25, 2002 in the name of David Sidman; and (16) for an "Apparatus, Method and System For Tracking Information Access," (attorney docket number 4188-4011PC), which was filed on January 25, 2002 in the name of David Sidman.

### FIELD

The disclosed invention relates generally to an apparatus, method and system to access information across a communications network. More particularly, the disclosed invention relates to an apparatus, method and system to access multiple instances of electronically published information based on various contexts of use on a communications network.

### BACKGROUND

### INTERNET

As Internet usage increases, the amount of information available on the Internet also increases. The information that exists on the Internet is of many different types, including documents in many formats such as: computer software, databases, discussion lists, electronic journals, library catalogues, online information services, mailing lists, news groups, steaming media, and the like. Fortunately, much of the information on the Internet can be accessed through the World-Wide Web using a web browser to interact with the network in a user-friendly way.

### NETWORKS

Networks are commonly thought to consist of the interconnection and interoperation of clients, peers, servers, and intermediary nodes in a graph topology. It should be noted that the term "server" as used herein refers generally to a computer, other device, software, or combination thereof that processes and responds to the requests of remote users across a communications network. Servers serve their information to requesting "clients." A computer, other device, software, or combination thereof that facilitates, processes information and requests, and/or furthers the passage of information from a source user to a destination user is commonly referred to as a "node." Networks are generally thought to facilitate the transfer of information from source points to destinations.

### TRANSMISSION CONTROL PROTOCOL-INTERNET PROTOCOL (TCP/IP)

The proliferation and expansion of computer systems, databases, and networks of computers has been facilitated by an interconnection of such systems and networks in an extraterritorial communications network commonly referred to as the Internet. The Internet has developed and largely employs the Transmission Control Protocol-Internet Protocol (TCP/IP). TCP/IP was developed by a Department of Defense (DoD) research project to interconnect networks made by various and varying network vendors as a foundation for a network of networks, i.e., the Internet. The development of TCP/IP was in part driven by a requirement by the DoD to have a network that will continue to operate even if damaged during battle, thus allowing for information to be routed around damaged portions of the communications network to destination addresses. Of course, if the source or destination address location itself is rendered inoperable, such delivery will not be possible.

The Internet is a packet-switched network and thus, information on the Internet is broken up into pieces, called packets, and transmitted in packet form. The packets contain IP addressing information called headers, which are used by routers to facilitate the delivery of the packets from a source to a destination across intermediary nodes on the Internet. Upon arrival at the destination, the packets are reassembled to form the original message, and any missing packets are requested again.

The IP component of the protocol is responsible for routing packets of information based on a four byte addressing mechanism; the address is written as four numbers separated by dots, each number ranging from 0 to 255, e.g., "123.255.0.123". IP addresses are assigned by Internet authorities and registration agencies, and are unique.

The TCP portion of the protocol is used for verifying that packets of information are correctly received by the destination computer from the source, and if not, to retransmit corrupt packets. Other transmission control protocols are also commonly used that do not guarantee delivery, such as User Datagram Protocol (UDP).

### WORLD WIDE WEB

The proliferation and expansion of the Internet, and particularly the World Wide Web (the web), have resulted in a vast and diverse collection of information. Various user interfaces that facilitate the interaction of users with information technology systems (i.e., people using computers) are currently in use. An information navigation interface called WorldWideWeb.app (the web) was developed in late 1990. Subsequently, information navigation interfaces such as web browsers have become widely available on almost every computer operating system platform.

Generally, the web is the manifestation and result of a synergetic interoperation between user interfaces (e.g., web browsers), servers, distributed information, protocols, and specifications. Web browsers were designed to facilitate navigation and access to information, while information servers were designed to facilitate provision of information. Typically, web browsers and information servers are disposed in communication with one another through a communications network. Information Servers function to serve information to users that typically access the information by way of web browsers. As such, information servers typically provide information to users employing web browsers for navigating and accessing information on the web. Microsoft's Internet Explorer and Netscape Navigator are examples of web browsers. In addition, navigation user interface devices such as WebTV have also been implemented to facilitate web navigation. Microsoft's Information Server and Apache are examples of information servers.

### UNNERSAL RESOURCE LOCATOR (URL)

The expansion of the web has resulted in an enormous quantity of information, which is accessible through the use of Universal Resource Locators (URLs). An URL is an address that is typically embodied as a hyperlink in a web page or is typed into a web browser. URLs for a given resource (most commonly a file located on a remote computer) refer only to a location for that resource. Typically, the reference to the location is achieved through the use of an unresolved IP address in conjunction with a directory path and file name; e.g., "http://www.aWebSite.com/aFolder/aFile.html". In this example, the URL directs the browser to connect to the computer named "www" in the domain "aWebSite.com," and to request the file named "aFile.html" stored in directory "aFolder" at that computer.

### UNIVERSAL NAME IDENTIFIER (UNI)

The Corporation for National Research Initiatives has created and implemented a new means of naming and locating information, called the Handle System. The Handle System is designed to improve upon the current use of URLs.

The Handle System introduces a level of indirection to locating and distributing information over the Internet. The Handle System is a general-purpose system for naming resources. Instead of being assigned a URL based on a particular resource's current network location, a resource may be assigned a Universal Name Identifier. A UNI is a form of Universal Resource Identifier (URI). URIs include both UNIs and URLs. A UNI, unlike a URL, serves and shall be regarded henceforth as a name for the resource that is persistent regardless of changes in the resource's location or other attributes. In turn, a Universal Resource Name (URN) is a type of UNI (i.e., a UNI subsumes the concept of a URN). Furthermore, a Handle is a type of URN. And a Digital Object Identifier (DOI) is a type of Handle. Thus, various forms of UNIs include Handles, URNs, DOIs, and/or the like. The various terms and/or forms of UNIs will be used interchangeably throughout this document, and may be assumed to be interchangeable unless stated otherwise. A Handle is a unique name, which is registered with the Handle System along with the current network location of the named resource. This location information commonly takes the form of a URL. One common type of Handle is known as a Digital Object Identifier (DOI). Handles may be then distributed to users in lieu of a URL, and superficially appear to function similarly to a hyperlink. When a user encounters a Handle, the user may select or enter the Handle much like a URL hyperlink, so long as the user's web browser is capable of making Handle requests. Such an encounter triggers an automated process to look up a resource's current location. The current location of the resource is associated with the resource's Handle in a directory made available by the Handle System, which in turn directs the user to the resource's current location. Unlike with a URL, if the resource moves, the Handle System directory entry can be updated, thereby assuring a persistent association between a Handle and the resource it identifies. An analogy can be made to the physical world: knowing only a URL for a given resource is akin to knowing only a person's street address, and not her name. If she were to move across town, it would be very difficult to locate her without knowing her name. The Handle System allows resources to be permanently named by way of a Handle, and it allows the current network location of resources to be looked up based on that name in a Handle System directory.

### SUMMARY

Digital Object Identifiers overcome many of the shortcomings of IP and location based addressing schemes. DOIs enable access to information over a communications network by providing a persistent identifier for information that may be regularly relocated. DOIs overcome the limitations of network addressing schemes limited to addressing locations by providing a mechanism to associate identifiers with information through an added level of indirection instead of associating identifiers with locations

Although DOIs provide a mechanism that allows for the association of an identifier with information instead of a location, DOIs in and of themselves do not allow for the access of multiple and/or varying instances of a piece of information in various locations, formats, or the access of various services associated with a given piece of information, based on various contexts of use.

One embodiment of the disclosed invention teaches how to access information across a communications network from multiple locations, in multiple formats, and accessible in variable fashions based on varying contexts of use. The present invention also overcomes the limitations of prior addressing schemes with the novel ability to associate a single identifier with information available, and accessible under varying conditions, from varying locations, in varying formats, based on various contexts of access.

Generally, according to one aspect of the present invention, publishers of content hereinafter referred to as publishers, assign Digital Object Identifiers to information by registering them with a DOI registration agency.

According to another aspect of the invention, at the time of registration, registrants or the registration agency may further register a number of type-value pairs to be associated with the DOI they are registering. According to yet a further aspect of the invention, the registered types and their associated values are used to provide multiple resolutions for registered DOIs. A "resolution" as defined by THE DOI HANDBOOK is a process for submitting a DOI identifier and receiving in response thereto one or more pieces of current information related to the submitted identifier. A simple resolution is one wherein the DOI resolves to a single piece of information, usually the URL for (i.e. the current network location of) a web page associated with the resource identified by the DOI. By contrast, a multiple resolution in accordance with the present invention is one that has more than one possible resolution available under varying contexts.

The above advantages and features are of representative embodiments only, and are not exhaustive and/or exclusive. They are presented only to assist in understanding the invention. It should be understood that they are not representative of all the inventions defined by the claims, to be considered limitations on the invention as defined by the claims, or limitations on equivalents to the claims. For instance, some of these advantages may be mutually contradictory, in that they cannot be simultaneously present in a single embodiment. Similarly, some advantages are applicable to one aspect of the invention, and inapplicable to others. Furthermore, certain aspects of the claimed invention have not been discussed herein. However, no inference should be drawn regarding those discussed herein relative to those not discussed herein other than for purposes of space and reducing repetition. Thus, this summary of features and advantages should not be considered dispositive in determining equivalence. Additional features and advantages of the invention will become apparent in the following description, from the drawings, and from the claims.

### BRIEF DESCRIPTION OF THE DRAWINGS

The accompanying drawings illustrate certain embodiments of the disclosure.
Figures 1 and 2 illustrate URL addressing across a communications network with moving information;
Figure 3 illustrates accessing of information through DOIs;
Figures 4 and 5 provide an overview of a handle;
Figures 6 and 7 provide an overview of the resolution mechanism for allowing users to access desired information;
Figure 8 provides an overview of the sequence of actions that a user performs to access information using DOIs;
Figure 9 provides a more complete overview of the sequence of actions that a user perform to access content information;
Figure 10 illustrates an exemplary mechanism for accessing information over a communications network;
Figure 11 provides an overview of another embodiment of exemplary mechanisms for retrieving information over a communications network;
Figure 12 provides an overview of the DOI system;
Figure 13 illustrates one non-limiting example of the Information Access Multiple Resolution Server (IAMRS) 14006 interacting with various entities;
Figure 14 illustrates one example embodiment incorporated into an IAMRS controller;
Figure 15 illustrates one non-limiting example graph topology providing multiple resolution access to information;
Figure 16 illustrates one non-limiting example graph topology providing multiple resolution registration and access of information.

### DETAILED DESCRIPTION

### IP ADDRESSING

Users access communications networks through addresses. Addresses represent locations. Users traverse locations in a communications network hoping to find information. A common communications address employs the IP address. The IP address may be likened to the real world by analogy to a street address. The IP address itself is a sequence of numbers, e.g., 209.54.94.99, and commonly has an associated name, e.g., www.contentdirections.com. A distributed database registry maintains the associated pairs of names and IP addresses and serves to resolve associated names into corresponding IP addresses. This allows people to remember and use names, e.g., www.report.com, instead of being forced to memorize and use a series of numbers, e.g., 209.54.94.99. These distributed databases assisting in the name resolution of IP addresses are commonly referred to as Domain Name Servers (DNS).

It is common for IP addresses to be embodied as Universal Resource Locators (URLs) that append even more navigation information into an address. Users may employ software to access information stored at URLs through the use of HTTP. An example is when a user specifies "http:llwww.report.com /reports/1999/IncomeStatement.html" in a web browser. Typically this further navigation information, i.e., "/reports/1999/IncomeStatement.html," provides a specific storage location within a computer server. This further navigation location may be likened to a real world address more specific than a street address that includes information such as a company name, department, and room number. This further navigation location is typically not handled or resolved by DNSs, but instead by an Information Server at the resolved IP address. For example, an information server at the resolved address of 123.123.123.123 for www.report.com would interpret and return information at a local location of "/reports/1999/IncomeStatement.html" within the server. An Information Server is a means for facilitating communications between a communication network and the computer server at a particular IP address. Commercial examples of an Information Server include Apache. An Information Server may be likened to a mail department for a business that further routes correspondence to appropriate locations within the business.

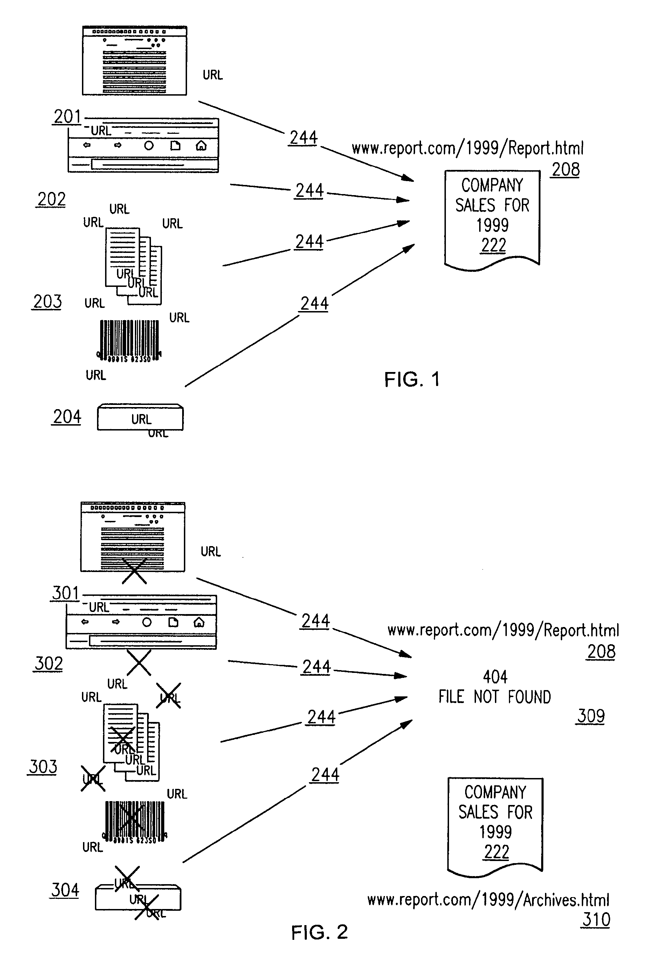

Figures 1 and 2 illustrate that IP addressing mechanisms do not maintain an association with information as it moves across a communications networks. Web page links generally employ HTTP, which in turn relies on IP addressing. Thus, URL links simply point to a location on a communication network and are not necessarily associated with any specific information. For example, a URL link referencing www.news.com will have different information associated between the URL and the information made available at the www.news.com location as information at the location is updated daily. In many instances, locations themselves may disappear as companies move information, move their operations, go out of business, etc.

For example, a report entitled "Company Sales for 1999" 222 existing at a location www.report.com/1999/Report.html 208 may be moved to www.report.com/1999/Archives.html 310, e.g., because the information was sold from one entity to another, archived, or many other reasons. The report at www.report.com/1999/Report.html 208 may have had 5 million web pages and URL links referencing the location 244, and when users attempt to access the information they may well receive a "404 File not found" error 309 because that location no longer exists and/or no longer contains the desired information. The error results because the DNSs were designed to always resolve users' requests to a location and because DNSs are not designed to maintain an association between URLs and a specific instantiation of information.

Figure 1 depicts a webpage 201, a user entered address 202, a document 203, and a memory device 204 all employing URLs and consequently IP addressing in an attempt to reference a piece of information (the report "Company Sales for 1999) 222. Then in Figure 2, the information 222 is moved from its original location 208 (for example at www.report.com/1999/Report.html) to a new location 310 of Figure 2 (for example www.report.com/1999/Archives.html). In Figure 2, this results in breaking 301-304 all the URLs 244 referencing the location and produces the dreaded "404 file not found" error 309 for all users and URLs making reference to the location (www.report.com/1999/Report.html) 208.

### HANDLE SYSTEM

Once a piece of information has been assigned a DOI and has been made available, the DOI system needs to be able to resolve what the user of the DOI wants to access. The technology that is used to manage the resolution of DOIs is better known as the "Handle System," and will be described in more detail below. THE DOI HANDBOOK provides a general overview of basic DOIs. In a nutshell, the Handle System includes an open set of protocols, a namespace, and an implementation of the protocols. The protocols enable a distributed computer system to store Handles (such as DOIs) of digital content and resolve those Handles into the information necessary to locate and access the content, to locate and access information related to the content, or to locate and access (i.e., provide an interface to) services associated with the content. This associated information can be changed as needed to reflect the current state of the identified content without changing the DOI, thus allowing the name of the item to persist over changes of location and other state information. Combined with a centrally administered DOI registration agency, the Handle System provides a general-purpose, distributed global naming service for the reliable management of information and services on networks over long periods of time. It is important to note that throughout the present disclosure that "source," "content" and/or "information" made accessible through the DOI system may comprise any identifiable content, source, information, services, transactions, and work of authorship, including articles, books, intangible objects, music albums, people, tangible physical objects, and/or the like further including selected discrete portions and/or combinations thereof The accessible information may be a URL to an application that initiates a service, a transaction, provides a selection mechanism, and/or the like. In one non-limiting example, the DOI may even be associated with information identifying a human being such as a social security number, telephone number, and/or the like. In another non-limiting example, the DOI may be associated with software modules, programming "objects," or any other network-based resource. Furthermore, a DOI can be used to represent most anything including the online representation of physical products (e.g., items currently identified by UPC or bar codes). In such an example, DOIs could resolve to the manufacturer's catalog page describing or offering the product, or even, in a multiple-resolution scenario, offer all services related to the object such as where to go to get the item repaired; where to find replacement parts; what the new or replacement product is; what kinds of pricing or leasing options are available, etc. Other example embodiments implementing DOIs include: representing different modules of software that may operate in distributed fashion across a communications network; telephone numbers for Voice-over-IP technology; gene sequences; medical records and/or other permanent records (DOIs will be especially useful with permanent records protected via encryption and/or other method that might invoke a certificate or decryption key); and/or the like. Another example embodiment for a DOI is to represent the permanent location of a temporary and/or dynamic value such as, but not limited to a current stock quote; current bid and offer prices (for stocks and/or any other kind of auction and/or exchange); a company's current annual report (versus different DOIs for different prior-year annual reports); and/or the like.

Users may access information through Digital Object Identifiers (DOIs). DOIs are associated with (i.e., are names for) information itself. DOIs are instances of "Handles" and operate within the framework of the "Handle system." A DOI allows for access to persistently associated information. The DOI is a string of characters followed by a separator further followed by a string of characters, e.g., 10.1065/abc123def. It should be noted and re-emphasized that although the present disclosure may make mention of specific sub-types of UNIs such as "URNs," "DOIs" and "Handles," the present disclosure applies equally well to the more generic types of UNIs, and as such, the present disclosure should be regarded as applying to UNIs in general where any UNI sub-type is mentioned, unless stated otherwise. Furthermore, although the Handle System, DOIs, and their supporting technologies and conventions, which are in use today, are a contemplated forum for the present invention, it should be noted that it is contemplated that the present invention may be applied to other forums based upon current and yet to be conceived conventions and systems.

### DOIs

Users employing DOIs to access information know they will resolve and access only associated information. In contrast to URLs that reference locations, DOIs are names for information, which can be used to look up that information's location and other attributes, as well as related services. It is envisioned that information may be any information as well as any computer-readable files, including e-books, music files, video files, electronic journals, software, smaller portions and/or combinations of any of the aforementioned content as well. It should be noted that since the electronic content will be made available over a communications network, hereinafter this application refers to such available information as being published on a communications network.

A DOI is a permanent and persistent identifier given to a piece of information made available on a communications network and registered in an electronic form, so that even if the location (i.e., URL), format, ownership, etc. of the content or associated data changes, users will be able to access the associated data. DOIs, or Handles, may be distributed to users in lieu of a URL. A user may access information associated with a particular DOI by selecting or entering the DOI in a Handle-enabled web browser much like a URL hyperlink. Many types of browsers may be enabled by way of browser plug-in software such as the Handle System plug-in available from www.cnri.org. Such an attempt to access DOI associated information triggers an automated process to look up a resource's current location. The current location of the resource is associated with the resource's DOI in a centrally managed directory made available by the Handle System, which in turn directs the user (i.e., the user's web browser) to the resource's current location. This direction is often accomplished by returning a current URL associated with the selected DOI and corresponding information.

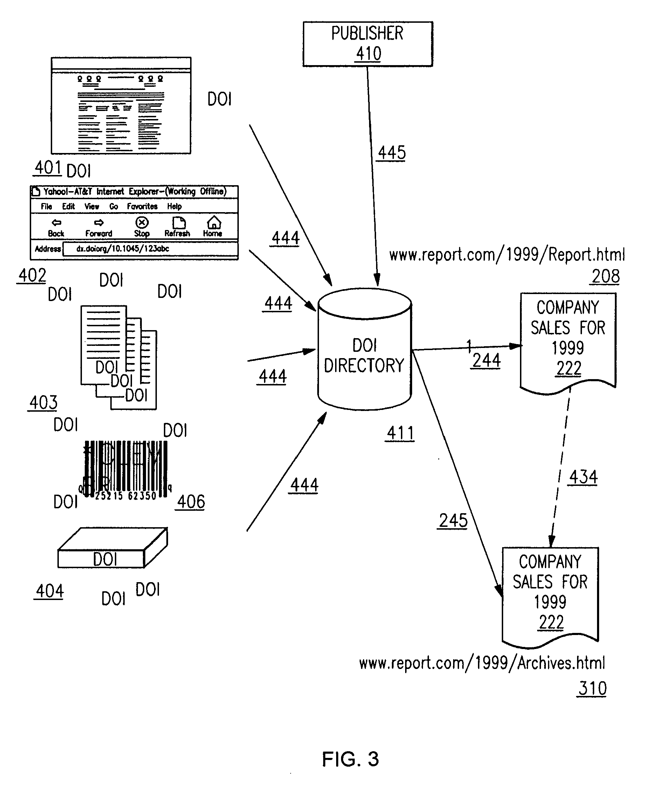

Figure 3 illustrates the access of information through DOIs in contrast to Figures 1 and 2 above. Initially the information (report of "Company Sales for 1999) 222 is given a DOI through a registration process. Instead of employing URLs, users reference 444 the information using the DOI through webpages 401, typed entry in a web browser 402, documents 403, devices 404, and/or the like. When users engage the DOI links 444, they are resolved in a centralized DOI directory 411 and the requesting users are given a URL link 244 to the information's 222 initial location (www.report.com/1999/Report.html) 208. Upon the information being moved 434 from its initial location (www.report.com/1999/Report.html) 208 to a new location (www.report.com/1999/Archives.html) 310, the publisher of the information 410 would inform the DOI centralized directory 445 of the new location for the information by sending an updated URL 245 referencing the new location. Thereafter, if users 401-404 attempt to access the information through the DOI links 444, the DOI directory will properly provide the new location 310 by way of the updated URL 245.

As noted above, DOIs may not only be used to identify information, but also smaller portions thereof. For example, according to the DOI system, it is possible for a book to have one DOI, while each of its chapters would have other unique DOIs to identify them; furthermore, each figure in the book may have yet other unique DOIs to identify them. In other words, according to the DOI system, it is possible to identify information with variable granularity as desired by the content publishers. Furthermore, it is envisioned that just as Universal Product Codes (commonly expressed as 'bar-codes' on consumer products) allow, for example, a supermarket's cash registers, inventory computers, financial systems, and distributors to automate the supply chain in the physical world, the present disclosure provides a mechanism for employing DOIs to empower all kinds of agents in the world of electronic publishing to automate the sale of digital content (and the licensing of rights to that content) across the Internet in an efficient manner, since each piece of saleable content would have associated with it a globally unique DOI, which could be used as a product identification code in transactions between agents.

### HANDLE STRUCTURE

The Handle System employs a pre-determined set of policies for efficient and user-friendly utilization thereof, some of which of which are listed below. The use of the Handle System for DOI resolution should ideally be free to users, with the costs of operation of the system possibly borne by the publishers. All DOIs are to be registered with a global DOI registry. Registrants are responsible for the maintenance of state data and metadata relating to DOIs that they have registered. The syntax of the DOI follows a standardized syntax. In use, the DOI will be an opaque string (dumb number). DOI registration agencies will manage the assignment of DOIs, their registration and the declaration of the metadata associated with them.

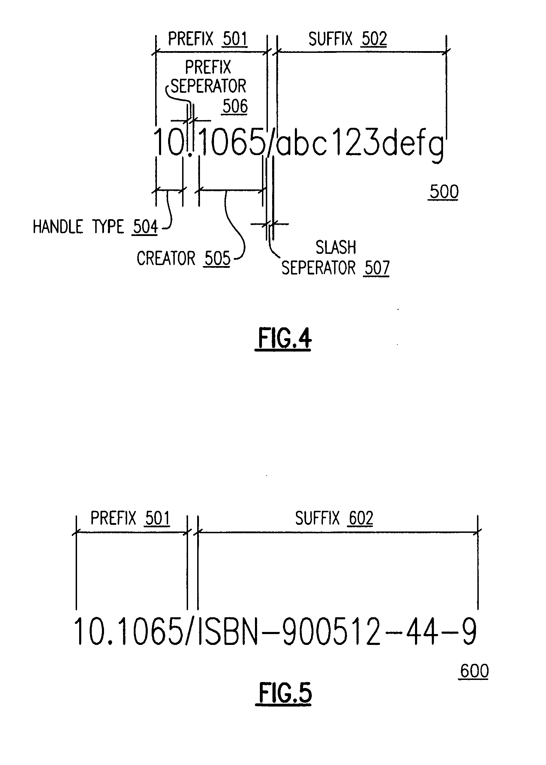

Figure 4 and 5 provide a schematic view of a handle 500. A handle 500 has two components, the prefix 501 and the suffix 502. The prefix 501 and the suffix 502 are separated by a forward slash 507. The handle 500 may incorporate any printable characters from almost every major language written or used today. There is no specified limitation on the length of either the prefix 501 or the suffix 502. As a result, it is envisioned that there are an almost infinite number of handles available. It is important to ensure that the combination of the prefix 501 and the suffix 502 is unique for supporting the integrity of the Handle System. Thus, the DOI registration agency will award the unique prefix 501 to a publisher, and put the responsibility on these publishers for ensuring that the suffix 502 assigned is unique as well. The Registration Agency and the Handle System administrators will both verify uniqueness of any new handle before depositing it in the Handle System. The Registration Agency deposits DOI records with the Handle System. The Handle System in turn services DOI resolution requests through a DOI directory.

The prefix 501 itself has two components separated by a prefix separator 506, which is a period. The first part of the handle prefix is the handle type 504. The second part of the handle prefix is the handle creator 505. The handle type 504 identifies what type of handle system is being used. When the handle type 504 starts with a "10" the handle is distinguished as being a DOI as opposed to any other implementation type of the Handle System. The next element of the prefix, separated by a period, is the handle creator 505, which is a number (or string of characters) that is assigned to an organization that wishes to register DOIs. Together, these two elements 504 and 505 form the unique publisher prefix portion of the DOI. There is no limitation placed on the number of handle (or specifically DOI) prefixes that any organization may choose to apply for. As a result, a publishing company, for example, might have a single DOI prefix 501, or might have a different one for each of its journals, or one for each of its imprints. While generally a prefix 501 may be a simple numeric string, the scope of the Handle System is not limited thereby. Thus, a prefix 501 may also utilize alphabetical characters or any other characters.

The suffix 502 is a unique string of alphanumeric characters, which, in conjunction with a particular prefix 501, uniquely identifies a piece of information. It should be appreciated that the combination of the prefix 501 for a publisher and the unique suffix 502 provided by the publisher avoids the need for the centralized allocation of DOI numbers. The suffix 502 may be any alphanumeric string that the publisher chooses, so long as it is unique among all suffixes registered in conjunction with the publisher's prefix.

Figure 5 provides a view of another embodiment of the DOI 600, in which a text book's ISBN number serves as the suffix 602. Consequently, where it is convenient, the publisher of the underlying content may choose to select as the suffix 602 any other identification code accorded to the original piece of content.

### HANDLE SYSTEM METADATA

A DOI 500 is merely an identification number that does not necessarily convey any information about its associated information. As a result, it is desirable to supplement the DOI with additional information regarding the addressed information to enable users to perform efficient and user-friendly searches for retrieving the desired content over a communications network. To allow easy identification of information, the present invention provides for the use of metadata, which is descriptive data about the identified information. While metadata may be any data structure that is associated with a DOI, according to one embodiment, the metadata will be comprised of a few basic fields that can accurately and succinctly identify the published information. According to this embodiment, the metadata will comprise an identifier associated with the entity from a legacy identifier scheme such as the International Standard Book Number (ISBN) for a book, title of the published content, type of content being published (such as book, music, video, etc.), whether the content is original or a derivation, a primary author of the content, the role of the primary author in creating the content, the name of the publisher, and/or the like. Since different types of content may require different metadata for describing it, one aspect of the DOI system envisions the use of different metadata for different types of content.

According to one example embodiment, metadata will be made available to any user of the DOI system to enable them to find the basic description of the entity that any particular DOI identifies. This basic description will allow the user to understand some basic things about the entity that published the content or the content itself.

As a result, to find out what information the DOI identifies, it is desirable to resolve it, and then review associated metadata because the DOI links the metadata with the content it identifies and with other metadata about the same or related content. In one embodiment, the metadata allows for the recognition of the information identified by the DOI 500 as well as its unambiguous specification. The metadata will also allow for the interaction between the information and other contents in the network (and with metadata about those entities).

### DOI INFORMATION ACCESS

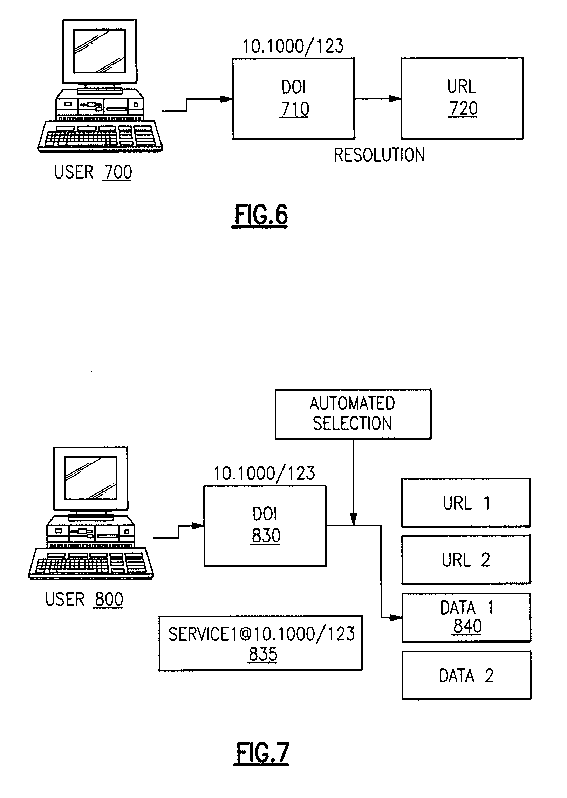

Figures 6 and 7 provide an overview of the resolution mechanism for allowing users to access the desired information by merely providing the DOI to the DOI system. Resolution in the present context includes the submitting of an identifier to a network service and receiving in return one or more pieces of current information related to the identifier. According to one embodiment of the DOI system, shown in Figure 6, the user uses her web browser 700 client to point to content identified by a particular DOI 710. This DOI 710 has only one URL associated with it, and must resolve to that URL. As a result, when the user makes a request for underlying content identified by a particular DOI 710, the user is directed to URL 720, where the desired content lies.

As such, this mechanism allows the location of the information to be changed while maintaining the name of the entity as an actionable identifier. If the location of the content is changed by the publisher, the publisher must merely update the DOI's entry in the Handle System database to ensure that the existing DOI 710 points to the new location of the content. As a result, while the location of the content has changed, the DOI remains the same and users are able to access the content from its new location by using the existing DOI.

Figure 7 provides an overview of a DOI system where users may use a DOI for resolving a request for one piece of content, out of a plurality of available identical copies of the same piece of content that are identified by the same DOI. Thus, the user uses the web browser 800 and provides the necessary DOI 830. The DOI 830 may be structured to describe the type of service desired 835. As a result, the DOI system is able to resolve the particular piece of content 840 that the user desires to access.

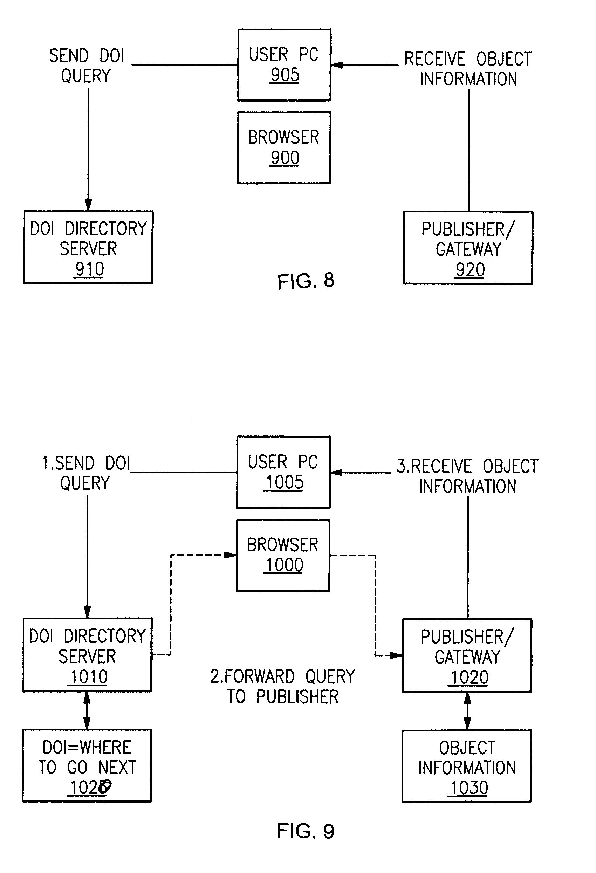

Figure 8 provides an overview of the sequence of actions that a user performs to access information, in accordance with the present invention. Initially, the user launches the browser client 900 on a computing device 905, such as personal computer, personal digital assistant (PDA), or the like. The user engages the browser 900 to make a DOI query. The DOI query is forwarded to the DOI Directory Server 910 over a communications network. The system of the DOI Directory Server 910 examines the DOI against the entries stored therein and forwards the appropriate URL to the browser 900 on the user's computer 900, in a manner that is invisible to the user. As a result, the browser is pointed to the desired content on the server of the appropriate publisher 920. Finally, upon receipt of the request from the user's browser, the publisher 920 forwards the desired information to the user, which may be accessed in the browser client 900.

Figure 9 provides a more complete view of the sequence of actions that a user perform to access content information, as shown in Figure 8. As noted above, the user launches the browser client 1000 on a computing device 1005. The user engages the browser 1000 to make a DOI query. The DOI query is forwarded to the DOI Directory Server 1010 over the communications network. The system of the DOI Directory Server 1010 examines the DOI against the entries stored therein. As a result of the checking of the DOI against the entries stored in the DOI Directory Server 1010, the DOI Directory Server 1010 determines where the DOI must lead the user 1050. The appropriate URL for the content is automatically forwarded to the user's browser 1000, without any intermediate intervention or action by the user. As a result, the browser 1000 is pointed to the appropriate publisher 1020 whose server is addressed by the underlying URL. The URL is used by the publisher's server 1020 to determine the exact content desired by the user, and the publisher's server 1020 forwards the appropriate content 1030 to the user.

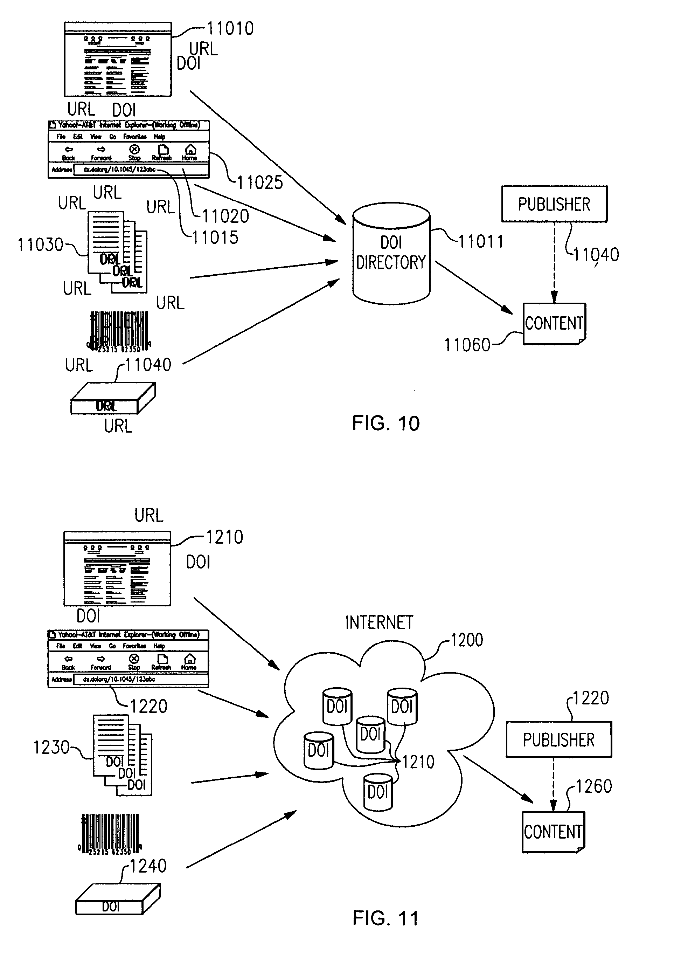

Figure 10 provides an overview of some of the exemplary mechanisms for accessing information over a communications network by resolving a DOI to obtain the URL where the desired content is located, in accordance with the present invention. According to one embodiment, the user may directly provide the DOI and the DOI system retrieves and forwards the appropriate content to the user by simply linking to the appropriate URL. According to another embodiment, the user may provide information related to some of the fields included in the metadata, whereupon the DOI system identifies the appropriate URL where the desired content is located.

As shown in Figure 10, according to one embodiment, a search engine 11010 may be provided to a user. In an alternative embodiment, a search engine such as www.google.com may be adapted to submit queries. The user searches for the appropriate DOI by providing some identifying information to the search engine 11010. The search engine 11010 uses the identifying information provided and searches its database of metadata to retrieve the DOI associated with the provided metadata information. The retrieved DOI is sent to the DOI directory 111011, which resolves-the URL wherin the desired content is located by a publisher 11040. Finally, the user's browser is pointed to the appropriate content 11060.

According to another embodiment, the user may provide the DOI 11015 in the address window 11020 of a browser 11025. The DOI 11015 contains the address of the a proxy server for the DOI directory 11011, which in Figure 10 is "dx.doi.org." As a result, the browser is pointed to the DOI directory 11011 located at dx.doi.org, which resolves the URL at which the desired content is located by a publisher 11040 and points the user's browser thereto.

According to another embodiment, the DOI may be embedded in a document or some form of information 11030, whereupon clicking the DOI directs the user to the appropriate DOI directory 11011, which determines the URL at which the desired content is located and points the user's browser thereto.

According to another embodiment, the DOI may be provided on a memory 11040, such as a CD-ROM or a floppy disk, whereupon the memory may automatically, or upon being activated, direct the user to the appropriate DOI directory 11011, which resolves the URL at which the desired content is located and points the user's browser thereto.

According to yet another embodiment, the DOI may be provided in printed form to a user, who enters the DOI manually as above or by way of optical and or mechanical peripheral input device.

Figure 11 provides an overview of another embodiment of the exemplary mechanisms for retrieving information over a communications network, whereupon the DOI system resolves a DOI to obtain the URL where the desired information is located. According to this embodiment, a plurality of DOI directories 1210 exist as a distributed DOI directory and form a Handle System 1200. In one embodiment, the distributed DOI directory acts and responds to requests as if it were a singular directory 11011. Otherwise resolutions take place similarly as in Figure 10.

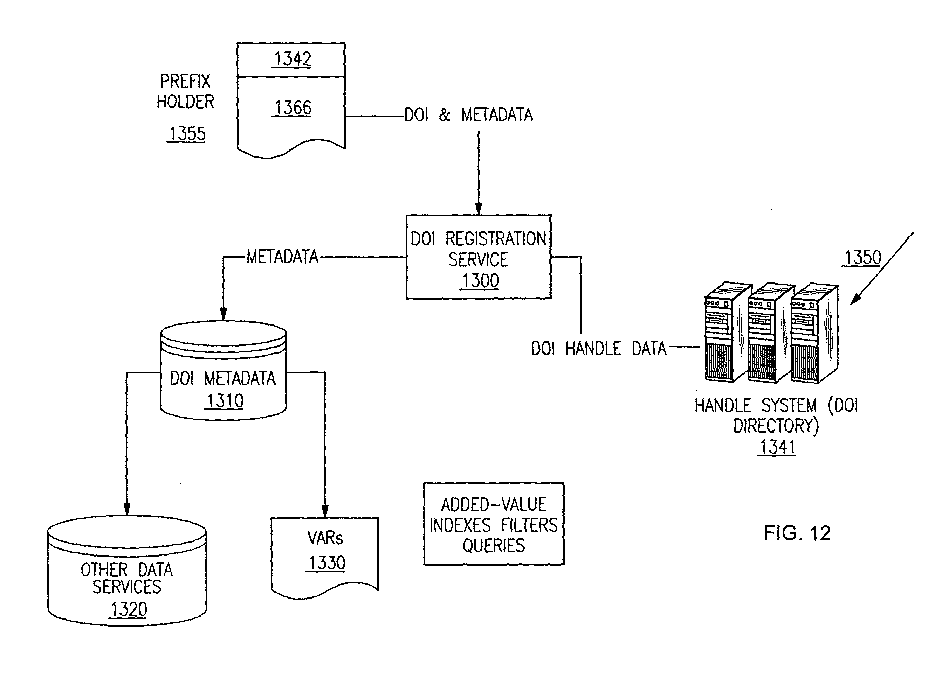

Figure 12 provides an overview of the DOI system, in accordance with the present invention, wherein the publishers, the DOI registration service and the Handle System collaborate together to create an efficient DOI system. The publishers 1342, who has already been assigned a unique prefix 501, assigns a suffix 502 to a piece of content 1366. As noted above, the scope of the content that can be addressed using a DOI is unlimited. As a result, the content 1366 may comprise any information and work of authorship, including articles, books, music albums, or selected discrete portions thereof. In addition to providing a DOI 500, the publisher 1342 collects metadata for the content 1366. The metadata may comprise the content's DOI 500, a DOI genre, an identifier, title, type, origination, primary agent, and agent's role.

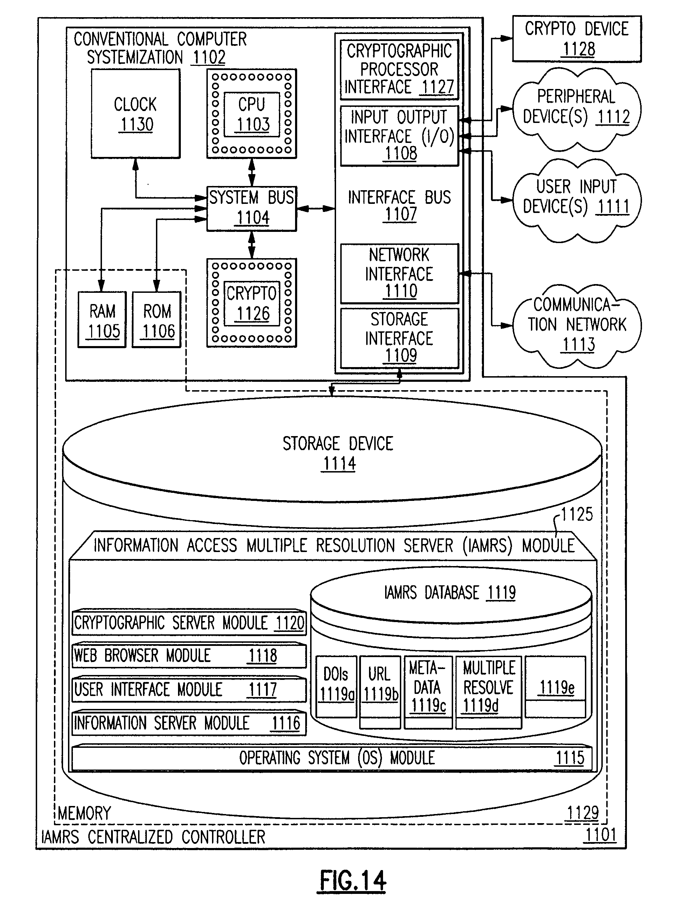

Once the publisher 1342 has assigned the suffix 502 to the content 1366 and collected the necessary metadata, the DOI 500 and the metadata are transmitted to the DOI registration agency 1300. The DOI registration agency 1300 maintains a database of DOIs 500, metadata of all the registered content 1366, as well as the URL at which the content 1366 is located. According to the present invention, the DOI registration agency 1300 forwards the metadata to a metadata database 1310, 1119c of Figure 14, which may or may not be integrally maintained by the DOI registration agency 1300.

The DOI registration agency 1300 may use the collected metadata for feeding it to other data services 1320 or for providing value added resources 1330 to the users. In addition, the DOI registration agency 1300 sends the appropriate DOI handle data to the Handle System 1350, which may comprise a plurality of DOI Directory Servers 1341.

### HANDLE SYSTEM MODEL

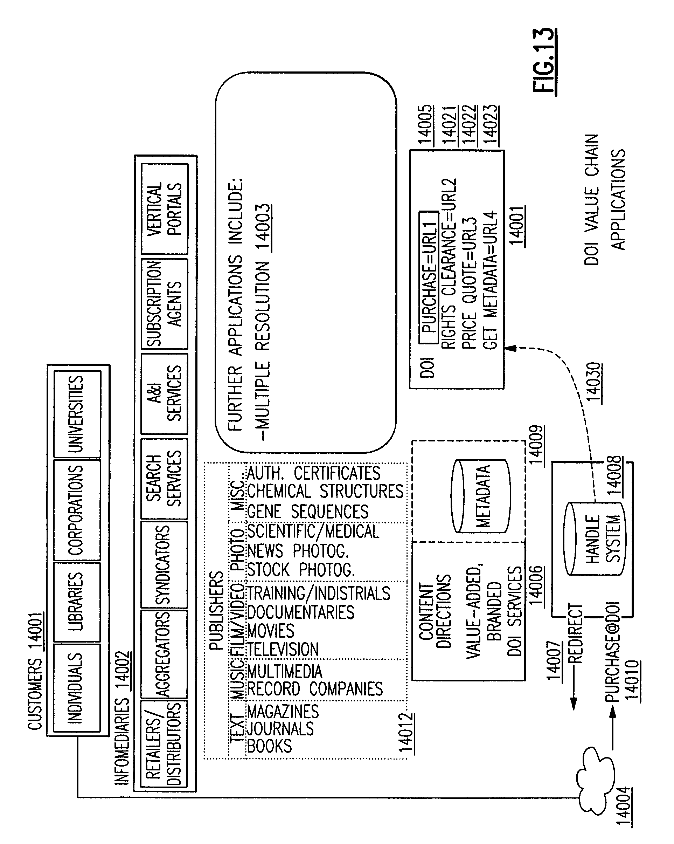

Figure 13 illustrates one non-limiting example of the IAMRS 14006 interacting with various entities. Publishers 14012 may wish to make their information available through different locations, in different formats, in different contexts, for different purposes and uses. In so doing, publishers may register a single DOI 14001 in an enhanced handle system 14008 with multiple resolutions 14005, 14021-14023. In part, the enhanced system is a multiple resolution system that will be discussed in greater detail in Figures 14-16. Publishers may wish to provide multiple resolution for a DOI to enhance the use and access of their information to customers 14001 such as individuals, libraries, corporations, universities, and/or the like, and information resellers (infomediaries) 14002 such as retailers/distributors, aggregators, syndicators, search services, A&I services, subsciption agents, vertical portals, and/or the like. For example, retailers/distributors 14002 may require a publisher's information to be located on its servers so as to properly account and charge for access to the information; in such a case an enhanced DOI service request 14010 by customers 14001 through a communication network 14004 to an enhanced handle system 14008 would select 14030 a PURCHASE record associated with URL1 14005. URL1 would then be redirected back to the customer 14007 through the communications network 14004. Publishers may also provide various locations for rights clearance 14021, price quotes 14022, and accessing metadata 14009, 14023.

### INFORMATION ACCESS MULTIPLE RESOLUTION SERVER CONTROLLER

Figure 14 illustrates one example embodiment incorporated into an Information Access Multiple Resolution Server (IAMRS) controller. In this embodiment, the IAMRS controller 1101 may serve to register, resolve, process, and update UNIs, and/or the like.

In one embodiment, the IAMRS controller 1101 may be connected to and/or communicate with entities such as, but not limited to: one or more users from user input devices 1111; peripheral devices 1112; and/or a communications network 1113. The IAMRS controller may even be connected to and/or communicate with a cryptographic processor device 1128.

A typical IAMRS controller 1101 may be based on common computer systems that may comprise, but are not limited to, components such as: a computer systemization 1102 connected to memory 1129.

### Computer Systemization

A computer systemization 1102 may comprise a clock 1130, central processing unit (CPU) 1103, a read only memory (ROM), a random access memory (RAM), and/or an interface bus 1107, and conventionally, although not necessarily, are all interconnected and/or communicating through a system bus 1104. The system clock typically has a crystal oscillator and provides a base signal. The clock is typically coupled to the system bus and various means that will increase or decrease the base operating frequency for other components interconnected in the computer systemization. The clock and various components in a computer systemization drive signals embodying information throughout the system. Optionally, a cryptographic processor 1126 may similarly be connected to the system bus. Of course, any of the above components may be connected directly to one another, connected to the CPU, and/or organized in numerous variations employed as exemplified by various computer systems.

The CPU comprises at least one high-speed data processor adequate to execute program modules for executing user and/or system-generated requests. The CPU may be a microprocessor such as the Intel Pentium Processor and/or the like. The CPU interacts with memory through signal passing through conductive conduits to execute stored program code according to conventional data processing techniques. Such signal passing facilitates communication within the IAMRS controller and beyond through various interfaces.

### Interface Adapters

Interface bus(ses) 1107 may accept, connect, and/or communicate to a number of interface adapters, conventionally although not necessarily in the form of adapter cards, such as but not limited to: input output interfaces (I/O) 1108, storage interfaces 1109, network interfaces 1110, and/or the like. Optionally, cryptographic processor interfaces 1127 similarly may be connected to the interface bus. The interface bus provides for the communications of interface adapters with one another as well as with other components of the computer systemization. Interface adapters are adapted for a compatible interface bus. Interface adapters conventionally connect to the interface bus via a slot architecture. Conventional slot architectures may be employed, such as, but not limited to: Accelerated Graphics Port (AGP), Card Bus, (Extended) Industry Standard Architecture ((E)ISA), Micro Channel Architecture (MCA), NuBus, Peripheral Component Interconnect (PCI), Personal Computer Memory Card International Association (PCMCIA), and/or the like.

Storage interfaces 1109 may accept, communicate, and/or connect to a number of storage devices such as, but not limited to: storage devices 1114, removable disc devices, and/or the like. Storage interfaces may employ connection protocols such as, but not limited to: (Ultra) Advanced Technology Attachment (Packet Interface) ((Ultra) ATA(PI)), (Enhanced) Integrated Drive Electronics ((E)IDE), Institute of Electrical and Electronics Engineers (IEEE) 1394, fiber channel, Small Computer Systems Interface (SCSI), Universal Serial Bus (USB), and/or the like.

Network interfaces 1110 may accept, communicate, and/or connect to a communications network 1113. Network interfaces may employ connection protocols such as, but not limited to: direct connect, Ethernet (thick, thin, twisted pair 10/100/1000 Base T, and/or the like), Token Ring, wireless connection such as IEEE 802.11b, and/or the like. A communications network may be any one and/or the combination of the following: a direct interconnection; the Internet; a Local Area Network (LAN); Metropolitan Area Network (MAN); an Operating Missions as Nodes on the Internet (OMNI); a secured custom connection; a Wide Area Network (WAN); a wireless network (e.g., employing protocols such as, but not limited to a Wireless Application Protocol (WAP), I-mode, and or the like); and/or the like. A network interface may be regarded as a specialized form of an input output interface.

Input Output interfaces (I/O) 1108 may accept, communicate, and/or connect to user input devices 1111, peripheral devices 1112, cryptographic processor devices 1128, and/or the like. I/O may employ connection protocols such as, but not limited to: Apple Desktop Bus (ADB); Apple Desktop Connector (ADC); audio: analog, digital, monaural, RCA, stereo, and/or the like; IEEE 1394; infrared; joystick; keyboard; midi; optical; PC AT; PS/2; parallel; radio; serial; USB; video interface: BNC, composite, digital, RCA, S-Video, VGA, and/or the like; wireless; and/or the like. A common output device is a video display, which typically comprises a CRT or LCD based monitor with an interface (e.g., VGA circuitry and cable) that accepts signals from a video interface. The video interface composites information generated by a computer systemization and generates video signals based on the composited information. Typically, the video interface provides the composited video information through a video connection interface that accepts a video display interface (e.g., a VGA connector accepting a VGA display cable).

User input devices 1111 may be card readers, dongles, finger print readers, gloves, graphics pads, joysticks, keyboards, mouse (mice), trackballs, trackpads, retina readers, and/or the like.

Peripheral devices 1112 may be connected and/or communicate with or to I/O and/or with or to other facilities of the like such as network interfaces, storage interfaces, and/or the like). Peripheral devices may be cameras, dongles (for copy protection, ensuring secure transactions as a digital signature, and/or the like), external processors (for added functionality), goggles, microphones, monitors, network interfaces, printers, scanners, storage devices, visors, and/or the like.

Cryptographic units such as, but not limited to, microcontrollers, processors 1126, interfaces 1127, and/or devices 1128 may be attached, and/or communicate with the IAMRS controller. A MC68HC16 microcontroller, commonly manufactured by Motorola Inc., may be used for and/or within cryptographic units. Equivalent microcontrollers and/or processors may also be used. The MC68HC16 microcontroller utilizes a 16-bit multiply-and-accumulate instruction in the 16 MHz configuration and requires less than one second to perform a 512-bit RSA private key operation. Cryptographic units support the authentication of communications from interacting agents, as well as allowing for anonymous transactions. Cryptographic units may also be configured as part of CPU. Other commercially available specialized cryptographic processors include VLSI Technology's 33 MHz 6868 or Semaphore Communications' 40 MHz Roadrunner284.

### Memory

A storage device 1114 may be any conventional computer system storage. Storage devices may be a fixed hard disk drive, and/or other devices of the like. However, it is to be understood that a IAMRS controller and/or a computer systemization may employ various forms of memory 1129. For example, a computer systemization may be configured wherein the functionality of on-chip CPU memory (e.g., registers), RAM, ROM, and any other storage devices are provided by a paper punch tape or paper punch card mechanism; of course such an embodiment is not preferred and would result in an extremely slow rate of operation. In a typical configuration, memory 129 will include ROM, RAM, and a storage device 1114. Generally, any mechanization and/or embodiment allowing a processor to affect the storage and/or retrieval of information is regarded as memory 1129. Thus, a computer systemization generally requires and makes use of memory. However, memory is a fungible technology and resource, thus, any number of memory embodiments may be employed in lieu of or in concert with one another.

### Module Collection

The storage devices 1114 may contain a collection of program and/or database modules and/or data such as, but not limited to: an operating system module 1115 (operating system); an information server module 1116 (information server); a user interface module 1117 (user interface); a web browser module 1118 (web browser); databases 1119 including tables such as but not limited to a DOI table 1119a, URL table 1119b, metadata table 1119c (tracking requests, ads, and/or the like), multiple resolution table 1119d, table 1119e, and/or the like; a cryptographic server module 1120 (cryptographic server); Information Access Multiple Resolution Server (IAMRS) module 1125; and/or the like (i.e., collectively a module collection). These modules may be stored and accessed from the storage devices and/or from storage devices accessible through an interface bus. Although non-conventional software modules such as those in the module collection, typically and preferably, are stored in a local storage device 1114, they may also be loaded and/or stored in peripheral devices, RAM, remote storage facilities through a communications network, ROM, various forms of memory, and/or the like.

### Operating System

The operating system module 1115 is executable program code facilitating the operation of a IAMRS controller. Typically, the operating system facilitates access of I/O, network interfaces, peripheral devices, storage devices, and/or the like. The operating system preferably is a conventional product such as a Microsoft Windows NT Server and/or Unix operating systems. Preferably, the operating system is highly fault tolerant, scalable, and secure. An operating system may communicate to and/or with other modules in a module collection, including itself, and/or facilities of the like. Conventionally, the operating system communicates with other program modules, user interfaces, and/or the like. For example, the operating system may contain, communicate, generate, obtain, and/or provide program module, system, user, and/or data communications, requests, and/or responses. The operating system, once executed by the CPU, may interact with communications networks, data, I/O, peripheral devices, program modules, memory, user input devices, and/or the like. Preferably, the operating system provides communications protocols that allow the IAMRS controller to communicate with other entities through a communications network 1113. Various communication protocols may be used by the IAMRS controller as a subcarrier transport mechanism for interacting with the Handle System, such as, but not limited to: multicast, TCP/IP, UDP, unicast, and or the like.

### Information Server

An information server module 1116 is stored program code that is executed by the CPU. The information server may be a conventional Internet information server such as, but not limited to, Microsoft's Internet. Information Server and/or the Apache Software Foundation's Apache. Preferably, the information server allows for the execution of program modules through facilities such as C++, Java, JavaScript, ActiveX, Common Gateway Interface (CGI) scripts, Active Server Page (ASP), and/or the like. Preferably the information server supports secure communications protocols such as, but not limited to, Secure Hypertext Transfer Protocol (HTTPS), Secure Socket Layer (SSL), and/or the like. Conventionally, an information server provides results in the form of web pages to web browsers, and allows for the manipulated generation of the web pages through interaction with other program modules. An information server may communicate to and/or with other modules in a module collection, including itself, and/or facilities of the like. Most frequently, the information server communicates with operating systems, other program modules, user interfaces, web browsers, and/or the like. An information server may contain, communicate, generate, obtain, and/or provide program module, system, user, and/or data communications, requests, and/or responses.

### User Interface

A user interface module 1117 is stored program code that is executed by the CPU. Preferably, the user interface is a conventional user interface as provided by, with, and/or atop operating systems and/or operating environments such as Apple Macintosh OS, e.g., Aqua, Microsoft Windows (NT), Unix X Windows (KDE, Gnome, and/or the like), and/or the like. The user interface may allow for the display, execution, interaction, manipulation, and/or operation of program modules and/or system facilities through graphical facilities. The user interface provides a facility through which users may affect, interact, and/or operate a computer system. A user interface may communicate to and/or with other modules in a module collection, including itself, and/or facilities of the like. Most frequently, the user interface communicates with operating systems, other program modules, and/or the like. The user interface may contain, communicate, generate, obtain, and/or provide program module, system, user, and/or data communications, requests, and/or responses.

### Web Browser

A web browser module 1118 is stored program code that is executed by the CPU. Preferably, the web browser is a conventional hypertext viewing application such as Microsoft Internet Explorer or Netscape Navigator (preferably with 128bit encryption by way of HTTPS, SSL, and/or the like). Some web browsers allow for the execution of program modules through facilities such as Java, JavaScript, ActiveX, and/or the like. Web browsers and like information access tools may be integrated into PDAs, cellular telephones, and/or other mobile devices. A web browser may communicate to and/or with other modules in a module collection, including itself, and/or facilities of the like. Most frequently, the web browser communicates with information servers, operating systems, integrated program modules (e.g., plug-ins), and/or the like; e.g., it may contain, communicate, generate, obtain, and/or provide program module, system, user, and/or data communications, requests, and/or responses. Of course, in place of a web browser and information server, a combined application may be developed to perform similar functions of both. The combined application would similarly affect the obtaining and the provision of information to users, user agents, and or the like from IAMRS enabled nodes. The combined application may be nugatory on systems employing standard web browsers. For added security, such a combined module could be configured to communicate directly with the IAMRS without an intermediary information server to further enhance security.

### IAMRS Databse

A IAMRS-database module 1119 may be embodied in a database that is stored program code that is executed by the CPU and it is stored data; the stored program code portion configuring the CPU to process the stored data. Alternatively, the IAMRS database may be implemented using various standard data structures, such as a list, array, struct, and or the like. If the IAMRS database is implemented as a data structure, the use of the IAMRS database may be integrated into another module such as the MRS module. A IAMRS database may communicate to and/or with other modules in a module collection, including itself, and/or facilities of the like. Most frequently, the IAMRS database communicates with an IAMRS module, other program modules, and/or the like. The database may contain, retain, and provide information regarding other nodes and data.

### Cryptographic Server

A cryptographic server module 1120 is stored program code that is executed by the CPU 1103, cryptographic processor 1126, cryptographic processor interface 1127, cryptographic processor device 1128, and/or the like. Preferably, cryptographic processor interfaces will allow for expedition of encryption and/or decryption requests by the cryptographic module; however, the cryptographic module, alternatively, may run on a conventional CPU. Preferably, the cryptographic module allows for the encryption and/or decryption of provided data. Preferably, the cryptographic module allows for both symmetric and asymmetric (e.g., Pretty Good Protection (POP)) encryption and/or decryption. Preferably, the cryptographic module allows conventional cryptographic techniques such as, but not limited to: digital certificates (e.g., X.509 authentication framework), digital signatures, dual signatures, enveloping, public key management, and/or the like. Preferably, the-cryptographic module will facilitate numerous encryption and/or decryption protocols such as, but not limited to: Data Encryption Standard (DES), Elliptical Curve Encryption (ECC), International Data Encryption Algorithm (IDEA), Message Digest 5 (MD5, which is a one way hash function), RC5 (Rivest Cipher), Rijndael, RSA (which is an Internet encryption and authentication system that uses an algorithm developed in 1977 by Ron Rivest, Adi Shamir, and Leonard Adleman), Secure Hash Algorithm (SHA), Secure Socket Layer (SSL), Secure Hypertext Transfer Protocol (HTTPS), and/or the like. A cryptographic module may communicate to and/or with other modules in a module collection, including itself, and/or facilities of the like. Preferably, the cryptographic module supports encryption schemes allowing for the secure transmission of information across a communications network to enable an IAMRS module to engage in secure transactions if so desired by users. Most frequently, the cryptographic module communicates with Information servers, operating systems, other program modules, and/or the like. The cryptographic module may contain, communicate, generate, obtain, and/or provide program module, system, user, and/or data communications, requests, and/or responses.

### Information Access Multiple Resolution Server

An IAMRS module 1125 is stored program code that is executed by the CPU. Generally, the IAMRS affects accessing, obtaining and the provision of information, and/or the like between nodes on a communications network. The IAMRS has the ability to resolve a UNIs to multiple instantiations. Generally, the IAMRS acts as a lookup facility to create, maintain, register, and update associations between a given piece of information, its UNI, and its current locations. The IAMRS coordinates with the IAMRS database to identify nodes that may be useful for improving data transfer for requested information, for resolving to various formats of the requesting information, providing an enhanced mechanism to create queries regarding the information, and or the like. An IAMRS enabling access of information between nodes maybe be developed by employing standard development tools such as, but not limited to: C++, shell scripts, Java, Javascript, SQL commands, web application server extensions, Apache modules, Perl scripts, binary executables, and/or other mapping tools, and/or the like. In one non-limiting example embodiment, the IAMRS server employs a cryptographic server to encrypt and decrypt communications. The IAMRS may service requests, update association information for UNIs, register UNIs, and much more. An IAMRS module may communicate to and/or with other modules in a module collection, including itself, and/or facilities of the like. Most frequently, the IAMRS module communicates with an IAMRS database, operating systems, other program modules, and/or the like. The IAMRS may contain, communicate, generate, obtain, and/or provide program module, system, user, and/or data communications, requests, and/or responses.

### Distributed IAMRS

The functionality of any of the IAMRS node controller components may be combined, consolidated, and/or distributed in any number of ways to facilitate development and/or deployment. Similarly, the module collection may be combined in any number of ways to facilitate deployment and/or development. To accomplish this, one must simply integrate the components into a common code base or in a facility that can dynamically load the components on demand in an integrated fashion.

The module collection may be consolidated and/or distributed in countless variations through standard data processing and/or development techniques. Multiple instances of any one of the program modules in the program module collection may be instantiated on a single node, and/or across numerous nodes to improve performance through load balancing data processing techniques. Furthermore, single instances may also be distributed across multiple controllers and/or storage devices; e.g., databases.

All program module instances and controllers working in concert may do so through standard data processing communication techniques.

The preferred node controller configuration will depend on the context of system deployment. Factors such as, but not limited to, the capacity and/or location of the underlying hardware resources may affect deployment requirements and configuration. Regardless of if the configuration results in more consolidated and/or integrated program modules, results in a more distributed series of program modules, and/or results in some combination between a consolidated and/or distributed configuration, communication of data may be communicated, obtained, and/or provided. Instances of modules (from the module collection) consolidated into a common code base from the program module collection may communicate, obtain, and/or provide data. This may be accomplished through standard data processing techniques such as, but not limited to: data referencing (e.g., pointers), internal messaging, object instance variable communication, shared memory space, variable passing, and/or the like (intra-application communication).

If module collection components are discrete, separate, and/or external to one another, then communicating, obtaining, and/or providing data with and/or to other module components may be accomplished through standard data processing techniques such as, but not limited to: Application Program Interfaces (API) information passage; (distributed) Component Object Model ((D)COM), (Distributed) Object Linking And Embedding ((D)OLE), and/or the like), Common Object Request Provider Architecture (CORBA), process pipes, shared files, and/or the like ( inter-application communication). Again, the preferable embodiment will depend upon the context of system deployment.

### MULTIPLE RESOLUTION

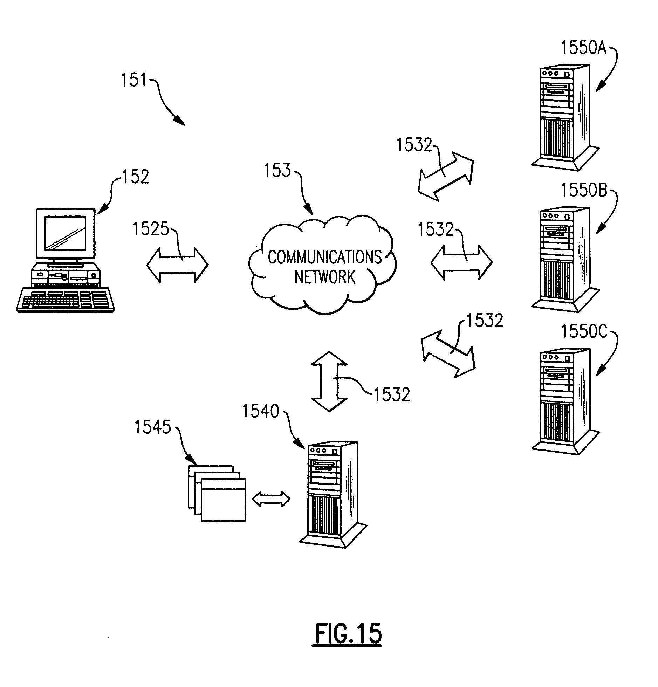

Referring now to Figure 15, therein is illustrated a system 1510 suitable for implementing the system and method according to an aspect of the present invention. Generally, the system 1510 includes a suitable microprocessor based device 20, a personal computer (PC) in the case of Figure 14, being communicable with a communications network 1530 via a communications channel 1525. The communications channel 1525 may be provided through an I/O 1108 or network interface 1110 of Figure 14. Also communicable with the communications network 1530 via communication channels 1532 are DOI registry server 1540, and servers 1550A - 1550C. Of course, the number of devices 1520 and servers 1540 and 1550A - 1550C illustrated are for purposes of explanation only. Likewise, while the servers 1540 and 1550A - 1550C are illustrated to be single devices, they could of course take the form of multiple devices or distributed server systems.

Referring still to Figure 15, a user of device 1520 causes a request for DOI resolution to be made to the DOI system, either by directly entering a DOI into the device using browser software such as Microsoft Internet Explorer or Netscape Navigator, or by directly entering a DOI into the device using browser software having appropriate extensions or capabilities for enabling the user to directly enter DOI requests, or by the use of a piece of software that is capable of making DOI requests on the user's behalf. The device 1520 communicates the request to a DOI server 1540. In response, DOI server 1540 queries one or more databases 1545, and identifies the record associated with the requested DOI. The database 1545 can be stored either on the server 1540 or anywhere else such that it is accessible to the server 1540. An example of a simple resolution is a URL associated with an electronic document or other content available via, or managed by, server 1550A (URL50A). The DOI server 1540 points the device 1520 to server 1550A by providing URL50A to the device 1520, or otherwise redirecting the device 1520, via a browser redirect command for example, to communicate with the server 1550A. The server 1550A then provides an electronic document or other content associated with the requested DOI to the device 1520. In the case of a multiple resolution, the device 20, upon communicating the entered request to the server 1540 may be pointed to any one, or several, or an arbitrary number of multiple resolutions, for example either URL50A, or URLs associated with either server 1550B or 1550C, such as URL50B or URL50C, for example. The result of the resolution request may not always be a URL or a pointer to a network location. It may also be information associated with the work to which the DOI is assigned, such as bibliographic information, or cryptographic keys, or it may be a means of accessing a service associated with the work.

According to another aspect of the invention, the type of resolution requested by the user-and other arguments to the DOI system are integrated into the DOI request. The arguments could form a prefix or a suffix to the DOI, or could be passed by means of tagged, formatted text, and are used to request the appropriate resolution or resolutions for example, such applications as facilitating sales through purchases from different vendors, providing different formats of the registered work, rights clearances, processing permissions and reuse requests, confirming authenticity, servicing metadata requests, providing confidentiality, enabling for appropriate copies of the registered work to be delivered and to service price requests.

For sake of clarity, DOIs that incorporate arguments to the DOI system will be referred to herein as enhanced DOIs. Generally, according to one aspect of the present invention, an enhanced DOI could take the form of XXXX@10:1000/abc123defg, where XXXX is the argument or list of arguments to the DOI system.

According to another aspect of the present invention, enhanced DOIs are provided to users. This can be accomplished by providing them to third parties for distribution to users, posting them on other websites, printing them on conventionally published works or packaging, or delivering them to users either electronically or via a tangible storage medium, such as a diskette or Compact Disc (CD) for example. Further, enhanced DOIs can be embedded within other content such as articles or e-mails for example. Of course, any reliable method of providing an enhanced DOI to a user can be utilized, as these non-limiting examples are discussed for purposes of illustration only. Users wishing to request a DOI activate, or submit requests for, the communicated enhanced DOIs, which are then used to supply the appropriate-resolution or- resolutions to the requesting user's device, as has been set forth.

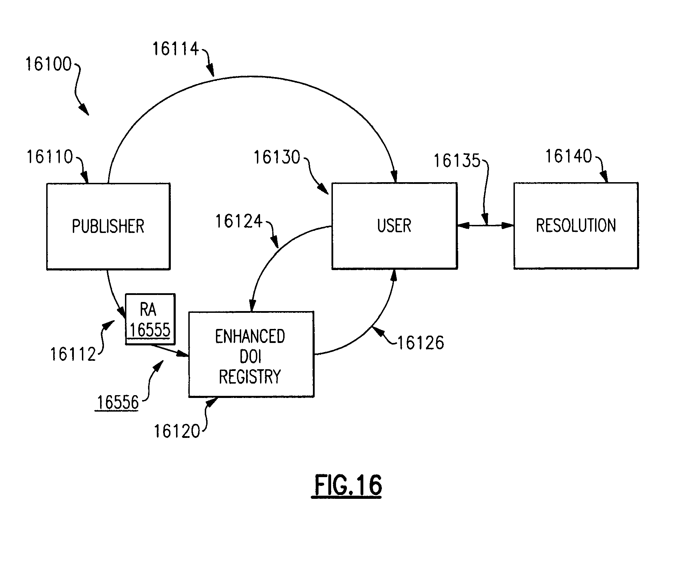

Referring now also to Figure 16, according to another aspect of the present invention, registered types and associated type values are also stored so as to be accessible to the server 1540 (see Figure 15). The registered types and type values can be stored in the database 1545, 1119 of Figure 14 or in another database accessible to the server 1540 for example (see Figure 15). Hence, the DOI registry becomes capable of resolving enhanced DOIs, as it includes data used for resolving the various registered types to their corresponding type values.

Still referring to Figure 16, therein is illustrated an overview 16100 of operation of a DOI system according to one aspect of the present invention. Therein, a publisher 16110 provides enhanced DOI registration data to, i.e., registers an enhanced DOI with, a Registration Agency 16555 as communication 16112. The Registration Agency then registers the DOI and the associated type-value pairs with the DOI directory 16120 as communication 16556. The publisher 16114 provides the registered enhanced DOI to a user 16130. The user 16130 submits a request for the registered enhanced DOI to the DOI registry 16120 as communication 16124. The DOI registry 16120 provides data indicative of the resolution 16140 for the enhanced registered DOI to the user 16130, or otherwise points the user 16130 to the resolution 16140, as communication 16126. The user 16130 then accesses the resolution 16140 as communication 16135. It should be understood that the resolution 16140 is merely one of many possible resolutions for the registered enhanced DOI, e.g., parsing for resolution may take place at the client, proxy, server and or the like.

Referring again to Figure 15, the present invention will now be further described as it relates to purchasing a registered work of authorship, i.e. content. One registered type for an enhanced DOI can be "PURCHASE". As has been set forth, the database 1545, 1119 of Figure 14 is utilized by the server 1540 to provide a resolution for a communicated DOI. Of course, an arbitrary identification could be used instead of recognizable text, such as "1" or "A" or other string which the registrant intends to equate to a purchase request. A multitude of such types can be registered and assigned to a corresponding number of vendors, possibly using a string composed of the type of the request and an additional string, such as "AMAZON", or "PREFERRED", or "1". An example of such an enhanced DOI which can point to many different vendors for a purchase request can take the form of PURCHASE.AMAZON@10.1000/abc123defg, or PURCHASE.VENDOR_1@10.10001abc123defg, or A.1@10.1000/abc123defg to purchase from one vendor and PURCHASE.BN@10.1000/abc123defg, or PURCHASE.VENDOR_2@10.1000/abc123defg, or A.2@10.1000/abc123defg to purchase the content from another vendor, for example.

The hierarchical construction of the name of the request type (such as "PURCHASE.1") does not necessarily imply that the handle system is able to understand that such a request is one of many kinds of requests of type "PURCHASE." In fact, the Handle system today can only return a value or values if the name of the type requested explicitly matches that of a type-value pair in a given DOI record. However, the hierarchical construction of such a name will allow more sophisticated client software to group type-value pairs together for useful purposes. For example, while the DOI registry will only return the requested value if the type requested exactly matches the type listed, a more sophisticated client could, for instance, request all the type-value pairs associated with a given DOI and select all possible resolutions beginning with the word "PURCHASE", and offer only these as choices to the user. This same use of hierarchically structured type names is applied throughout the other applications listed below.

Accordingly an enhanced DOI according to the present invention can be used to persistently and selectively point requesting users to different ones, or different classes, of an arbitrary number of multiple resolutions corresponding to different vendors.

The level of redirection enabled by the use of enhanced DOIs is advantageous to the publisher. For example, if an enhanced DOI of the form PLTRCHASE_PREFERRED@10.1000/abc123defg is registered and provided to many users via a mass distribution of CDs for example, the registrant advantageously can quickly and easily update each user's purchase process transparently. For example, assuming that when the CDs were first distributed the registrant wished requesting ones of the users to purchase the content from a first online vendor or alternatively a second online vendor, in that order. If the registrant wishes to now point the users to the second online vendor and then alternatively the first online vendor, in that order, the registrant can simply reorder the entries in the database utilized by the DOI registry.

According to the present invention, this need is abolished. Furthermore, this approach allows the registrant to control this redirection dynamically, over time-e.g., the registrant could, at some future time, change the designation (type value) of its preferred purchase outlet such that all "purchase preferred" DOIs will now route to the new preferred sales outlet rather than the old.

According to another aspect of the present invention, any number of vendors could be represented in a DOI record in order of the publisher's preference for them. For example, "PURCHASE.1@10.1000/abc123defg" could resolve to a page at Amazon.com, while "PURCHASE.2@10.1000/abc123defg" might resolve to the URL of a page at Barnesandnoble.com. "PURCHASE.3@10.1000/abc123defg" could resolve to the URL of a purchase page at the online bookseller FatBrain.com. Any number of vendors, in descending order of preference, could be listed in this fashion. If, at any time, the publisher wished to change the order of this list, the values of the corresponding type-value pairs could be updated, so that a request to "PURCHASE.2@10.1000/abc123defg" now resolves to a purchase page at, for example, the online bookseller FatBrain.com, while the URL for the purchase of that book at BarnesandNoble.com would be assigned, for example, to "PURCHASE.3@10.1000/abc123defg". In this way, the publisher could dynamically control the list of preferred vendors for each DOI. This approach could also be extended to all other multiple resolution applications described herein.

According to another aspect of the present invention another type can be used to identify different formats of the content. For example, works of literature may be available in electronic form in multiple formats. Representative formats include Rocketbook and E-book compatible formats and Portable Document Format (PDF) developed by Adobe Systems, for example. It is desirable for registrants to be able to persistently and easily distinguish between these formats using a single DOI. In such as case a FORMAT.1@10:YYYY/ZZZ, FORMAT.2@10:YYYY/ZZZ, OR FORMAT.3@10:YYYY/ZZZ enhanced DOI can be specified, for example.

Rights clearance requests represent a significant undertaking for publishers. Handling rights clearance requests includes responding to reuse requests for example, as well as other conventional rights clearance requests as are well understood in the pertinent fields. According to another aspect of the present invention, another registered type can take the form of a rights clearance request such as "RC" for example. Corresponding type values may include what type of rights clearance is being sought, e.g. a request for reuse may be a type value "1". In such a case, an enhanced DOI can take the form of RC.1@10:YYYY/ZZZ.

According to another aspect of the present invention, enhanced DOIs can be used for confirming authenticity of registered content. Particular methods for confirming authenticity of content, such as electronic documents is well known. Suitable techniques which can be used basically involve calculating a unique number based upon the makeup of the registered content. A public code is then published which is associated with the unique number. A calculation can be performed at a future date using the public code and unique number. SURETY.COM of Reston, Virginia, provides such a service referred to as a digital notary service and described in U.S. Patent No. 5,136,647, issued August 4, 1992, and U.S. Patent Re. 34,954, the entire disclosures of which are hereby incorporated by reference. A request to resolve the enhanced DOI "AUTHENTICATE@10.1000/abc123defg" could redirect the user to a service where the authenticity of the content he or she holds can be verified.

According to another aspect of the present invention, enhanced DOIs can be used for servicing metadata requests. Metadata, as used herein, refers to data about registered content. Such metadata can include: author, publisher, date of first publication, reference lists, summaries and other useful information, for example. According to another aspect of the present invention, a registered type can take the form of "METADATA", while corresponding value types designate subgroups of available metadata for example. This can be used to provide different levels of specificity of metadata for different users. For example, a registered type value "ALL" may designate all available metadata, while another registered type value "ANALYSIS" would return the DTD (Document Type Definition) itself. Using differently constructed URLs as resolutions for these enhanced DOIs for example, a publisher can provide these sets and subsets of metadata using well known techniques. Enhanced DOIs, such as METADATA.ALL@10:YYYY/ZZZ, and METADATA.ANALYSIS@10:YYYY/ZZZ can be effectively used according to an aspect of the present invention.

According to another aspect of the present invention, enhanced DOIs can be used for servicing cryptographic key requests. Cryptographic keys , as used herein, refers to keys used for decoding a cipher. Such keys may be used for encryption techniques as discussed above in Figure 14 with regard to the cryptographic server. This can be used to provide different retrieval of public or private keys of a public/private key pair that is stored in the Handle System. In addition to facilitating any and all general encryption functionality, such a use of the enhanced DOI system provides a robust unlocking key-mechanism for digital rights management applications by verifying authenticity, verifying a users identity, and or the like. For example, a registered type value "PUBLIC_KEY" and "PRIVATE_KEY" may designate and return public and private keys, upon resolution.

According to another aspect of the present invention, enhanced DOIs can be used for administration of DOI records.. Administration, as used herein, refers to the accessing, maintenance, and updating of DOI records stored in either or both a DOI registry 17220 and DOI enhancement registry 17250. Such administration may be used for facilitating the updating of the DOI registry itself. This can be used to access and update values stored in the Handle System. For example, a registered type value "ADMIN" and may designate and return administrative information for a particular DOI. Using differently constructed URLs as resolutions for these enhanced DOIs for example, a publisher can be redirected to a location that will allow him or her to administer (enhanced) DOI registry records using well known techniques. Enhanced DOIs, such as ADMIN.1@10.1000/abc123defg and ADMIN.2@10.1000/abc123defg can be effectively used according to an aspect of the present invention. According to another aspect of the present invention, enhanced DOIs can be used to solve the so-called "Harvard Problem" and for enabling appropriate copies of the registered work to be delivered. The "Harvard Problem" or "appropriate copy" problem, as it has come to be called in the library community, involves the desire of university libraries to allow their users to perform metadata queries that result in their finding locally-held copies of content to which the university may subscribe through 3rd party services, as opposed to directly from the publisher, thus allowing them to manage access rights more easily and monitor usage, for example. According to an aspect of the present invention, appropriate copies can be provided by using a corresponding type and type values for registered DOIs. According to another aspect of the present invention, multiple copies of a work can be stored in multiple locations, and the enhanced DOI can be used to ensure optimum availability and performance improved by developing client-side software which would monitor the responsiveness of each available copy (for example by requesting each in turn and measuring the relative response times, after which any subsequent request would, by default, be directed to that copy first).

Similarly to purchase requests, according to another aspect of the present invention, enhanced DOIs can be used to service price requests. A registered type can take the form of "PRICE", for example. Corresponding type values can also be used to designate material information related to pricing, such as whether or not the requesting user is entitled to a discount. In such a case, an enhanced DOI such as PRICE.1@10.1000/abc123defg can be used to request a price for the registered content for a user entitled to pricing with a classification associated with the type value "1". This allows the owner to implement dynamic pricing over time, which in turn allows limited time offers, temporary sales, etc., as well as enabling differential pricing by utilizing different price designations (e.g., PRICE.1, PRICE.2, etc.)]

It should be understood that the above description is only representative of illustrative embodiments. For the convenience of the reader, the above descriptions have focused on a representative sample of all possible embodiments, a sample that teaches the principles of the invention. The description has not attempted to exhaustively enumerate all possible variations. That alternate embodiments may not have been presented for a specific portion of the invention or that further undescribed alternate embodiments may be available for a portion is not to be considered a disclaimer of those alternate embodiments. It will be appreciated that many of those undescribed embodiments incorporate the same principles of the invention and others are equivalent. Thus, it is to be understood that the embodiments and variations shown and described herein are merely illustrative of the principles of this invention and that various modifications may be implemented without departing from the scope and spirit of the invention.

The following numbered clauses conform with the claims of the parent application as filed and set out aspects and features of the present disclosure.

### CLAUSES

1. A method of using a computer to access information, comprising:
   receiving an unique, persistent, and universal name identifier message from a user;
   determining that the message is enhanced with a syntax that allows for selection of an appropriate associated resolution address from an enhanced directory that maintains unique, persistent, and universal name identifiers and multiple locations for information associated with the unique, persistent, and universal name identifiers;
   querying a directory that maintains unique, persistent, and universal name identifiers and locations for information associated with the unique, persistent, and universal name identifiers for query results based on the received unique, persistent, and universal name identifier, if the message is un-enhanced;
   querying the enhanced directory for query results based on the received unique, persistent, and universal name identifier, if the message is enhanced;
   selecting the appropriate associated resolution address from the query results of the enhanced directory for selection results based on the enhanced message syntax, if the enhanced directory was queried;
   sending the query results to the user, if the enhanced directory was queried; and
   sending the selection results to the user, if the appropriate associated resolution address from the enhanced directory was selected.
2. The method of clause 1, wherein the selection is appropriate when the message's enhanced syntax matches an entry in enhanced directory records.
3. The method of clause 1, wherein the unique, persistent, and universal name identifier is a digital object identifier.
4. The method of clause 1, wherein the syntax specifies a selection target entry in an enhanced unique, persistent, and universal name identifier directory.
5. The method of clause 1, wherein the syntax specifies a target for selection.
6. The method of clause 4, wherein the syntax specifies a parameter for the target.
7. The method of clause 5, wherein the syntax specifies a parameter for the target.
8. A method of using a computer to access information, comprising:
   generating a unique, persistent, and universal name identifier for information;
   specifying an enhanced syntax for the unique, persistent, and universal name identifier including, a plurality of alphanumeric labels that serve as selection targets and fields;
   specifying at least one location where the information that is associated with the unique, persistent, and universal name identifier may be accessed
   associating specified locations with the labels; and
   sending the unique, persistent, and universal name identifier, the labels, and the associated specified locations to a directory that maintains unique, persistent, and universal name identifiers and locations for information associated with the unique, persistent, and universal name identifiers.
9. The method of clause 8, further comprising:
   receiving the unique, persistent, and universal name identifier, the labels, and the associated specified locations at the directory.
10. The method of clause 9, further comprising:
   creating a record in a database for the unique, persistent, and universal name identifier including fields for the labels for storing the associated specified locations.
11. The method of clause 8, wherein the unique, persistent, and universal name identifier is a digital object identifier.
12. A method of using a computer to access information, comprising:
   querying an enhanced directory that maintains unique, persistent, and universal name identifiers and multiple locations for information associated with the unique, persistent, and universal name identifiers based on criteria; and
   receiving query results from the enhanced directory based on the query criteria.
13. The method of clause 12, wherein the criteria includes an unique, persistent, and universal name identifier with an enhanced syntax that allows for selection of an appropriate associated resolution address.
14. The method of clause 12, wherein the criteria includes metadata.
15. The method of clause 12, wherein the unique, persistent, and universal name identifier is a digital object identifier.
16. The method of clause 12, wherein the syntax specifies a selection target entry in an enhanced unique, persistent, and universal name identifier directory.
17. The method of clause 12, wherein the syntax specifies a target for selection.
18. The method of clause 16, wherein the syntax specifies a parameter for the target.
19. The method of clause 17, wherein the syntax specifies a parameter for the target.
20. A method of using a computer to access information, comprising:
   receiving a query from a user at an enhanced directory that maintains enhanced unique, persistent, and universal name identifiers and multiple locations for information associated with the enhanced unique, persistent, and universal name identifiers based on criteria;
   selecting a record matching the query with an associated resolution address for selection results from a database containing enhanced unique, persistent, and universal name identifiers and locations for information associated with the enhanced unique, persistent, and universal name identifiers,
   wherein the enhanced directory includes a database maintaining a plurality of alphanumeric labels that serve as selection targets and fields that store locations where the information that is associated with the enhanced unique, persistent, and universe name identifier may be accessed; and sending selection results to the user from the enhanced directory based on the query criteria.
21. The method of clause 20, wherein the criteria includes an unique, persistent, and universal name identifier with an enhanced syntax that allows for selection of an appropriate associated resolution address.
22. The method of clause 20, wherein the criteria includes metadata.
23. The method of clause 20, wherein the unique, persistent, and universal name identifier is a digital object identifier.
24. The method of clause 20, wherein the syntax specifies a selection target entry in an enhanced unique, persistent, and universal name identifier directory.
25. The method of clause 20, wherein the syntax specifies a target for selection.
26. The method of clause 24, wherein the syntax specifies a parameter for the target.
27. The method of clause 25, wherein the syntax specifies a parameter for the target.
28. The method of clause 26, wherein the syntax specifies a parameter for the target.
29. A memory for access by a program module to be executed on a processor, comprising:
   a data structure stored in the memory, the data structure, including,
      a unique, persistent, and universal name identifier type;
      an enhanced syntax type for the unique, persistent, and universal name identifier including, a plurality of alphanumeric labels that serve as selection targets and fields,
   wherein the labels are of a type allowing for the storage of a location where information that is associated with the unique, persistent, and universal name identifier may be accessed.
30. The memory of clause 29, wherein the labels have a first resolution level that is separated from the next resolution level by an argument separator character.
31. The memory of clause 30, wherein the argument separator character is a period.
32. The memory of clause 30, wherein the first resolution level specifies a location target, and the second resolution level specifies a parameter.
33. A method of using a computer to access information, comprising:
   querying an enhanced directory that maintains unique, persistent, and universal name identifiers and multiple locations for information associated with the unique, persistent, and universal name identifiers based on criteria;
   receiving query results from the enhanced directory based on the query criteria
   modifying the results for a specified enhanced unique, persistent, and universal name identifier obtained with the received query results,
   wherein the enhanced unique, persistent, and universal name identifier includes an enhanced syntax that further including:
   a plurality of alphanumeric labels that serve as selection targets and fields, at least one location where information that is associated with the enhanced unique, persistent, and universal name identifier may be accessed; and
   sending the modification to the enhanced directory for storage for the specified enhanced unique, persistent, and universal name identifier.
34. The method of clause 33, wherein the criteria includes an unique, persistent, and universal name identifier with an enhanced syntax that allows for selection of an appropriate associated resolution address.
35. The method of clause 33, wherein the modification includes changes to any criteria.
36. The method of clause 35, wherein the criteria includes metadata.
37. The method of clause 33, wherein the unique, persistent, and universal name identifier is a digital object identifier.
38. The method of clause 33, wherein the syntax specifies a selection target entry in an enhanced unique, persistent, and universal name identifier directory.
39. The method of clause 33, wherein the syntax specifies a target for selection.
40. The method of clause 37, wherein the syntax specifies a parameter for the target.
41. The method of clause 38, wherein the syntax specifies a parameter for the target.
42. A method of using a computer to access information, comprising:
   receiving a request to modify a record for a specified enhanced unique, persistent, and universal name identifier with modified criteria,
   wherein the request includes an enhanced syntax that further includes:
   a plurality of alphanumeric labels that serve as selection targets and fields,
   at least one location where information that is associated with the enhanced unique, persistent, and universal name identifier may be accessed;
   modifying the record for the specified enhanced unique, persistent, and universal name identifier with the modified criteria.
43. The method of clause 42, wherein the unique, persistent, and universal name identifier is a digital object identifier.
44. The method of clause 42, wherein the syntax specifies a selection target entry in an enhanced unique, persistent, and universal name identifier directory.
45. The method of clause 42, wherein the syntax specifies a target for selection.
46. The method of clause 43, wherein the syntax specifies a parameter for the target.
47. The method of clause 44, wherein the syntax specifies a parameter for the target.
48. The method of clause 42, wherein the criteria includes an unique, persistent, and universal name identifier with an enhanced syntax that allows for specification of an appropriate associated resolution address.
49. The method of clause 42, wherein the modification includes changes to any criteria.
50. The method of clause 49, wherein the criteria includes metadata.
51. A method of creating a multiple resolution mechanism, comprising:
   receiving a first location for a first content, wherein said first content is retrievable from said first location;
   receiving first metadata for said first content, wherein said first metadata provides descriptive data regarding said first content;
   cataloging said first location and said first metadata for said first content so that said first content can be identified by providing said first metadata;
   receiving a second location for a second content, wherein said second content is retrievable from said second location;
   receiving second metadata for said second content, wherein said second metadata provides descriptive data regarding said second content; and
   cataloging said second location and said second metadata for said second content so that said second content can be identified by providing said second metadata,
   wherein the multiple resolution mechanism is capable of receiving a content retrieval request from a user, parsing said content retrieval request to determine the contest requested, and appropriately transmitting one of said first content and said second content to said user is response to said content retrieval request.
52. The method of clause 51, wherein said first content is in first resolution type and said second content is in second resolution type, wherein said content retrieval request comprises a request for one of said first content and said second content.
53. The method of clause 52, wherein said content retrieval request is in a predetermined syntax, said predetermined syntax allowing parsing of the content retrieval request, said parsing enabling the multiple resolution mechanism to determine the request for one of said first content and said second content.
54. The method of clause 53, wherein said predetermined syntax is in the form of Servicel@10.YYYY/ZZZZ, wherein Servicel identifies resolution type of content requested by the user, 10 identifies a system being used to request and retrieve the content, YYYY identifies an entity that owns rights to the content, and ZZZZ identifies the content.
55. The method of clause 54, wherein said resolution type may be one said first resolution type and said second resolution type.
56. The method of clause 53, wherein the content may be obtained a plurality of vendors.
57. The method of clause 55, wherein said predetermined syntax is in the form of Servicel.XXXX@10. YYYY/ZZZZ, wherein Servicel identifies resolution type of content requested by the user, XXXX identifies one of said plurality of vendors, 10 identifies a system being used to request and retrieve the content, YYYY identifies an entity that owns rights to the content, and ZZZZ identifies the content.
58. The method of clause 57, wherein said resolution type may be one said first resolution type and said second resolution type.
59. The method of clause 52, wherein said first content is identical to said second content.
60. A method of retrieving content over a network, said network having a multiple resolution mechanism, comprising:
   transmitting a content retrieval request to the multiple resolution mechanism for a desired content, said desired content available in multiple resolutions,
   wherein said content retrieval request is in a predetermined syntax, said predetermined syntax comprising a notation to denote the desired resolution for the content, wherein said predetermined syntax allows the multiple resolution mechanism to parse the content retrieval request for determining the desired resolution for the content; and
   receiving said content in said desired resolution.
61. The method of clause 60, wherein said predetermined syntax is in the form of Servicel@10.YYYY/ZZZZ, wherein Servicel identifies resolution type of content requested by the user, 10 identifies a system being used to request and retrieve the content, YYYY identifies an entity that owns rights to the content, and ZZZZ identifies the content.
62. The method of clause 60, wherein the content may be obtained a plurality of vendors.
63. The method of clause 62, wherein said predetermined syntax is in the form of Servicel. XXXX@10.YYYY/ZZZZ, wherein Servicel identifies resolution type of content requested by the user, XXXX identifies one of said plurality of vendors, 10 identifies a system being used to request and retrieve the content, YYYY identifies an entity that owns rights to the content, and ZZZZ identifies the content.
64. A method of transmitting content over a network to a user, wherein said content is available in more than one resolution types, comprising:
   receiving a content retrieval request from a user, said content retrieval request denoting content desired by the user, said content retrieval request further denoting one of said resolution types for said content;
   parsing said content retrieval request to resolve the content requested by said user, wherein said content retrieval request includes one of said resolution types for the content requested;
   comparing said content retrieval request against stored data;
   determining a location on the network where the content in said one of resolution types is located, wherein said stored data includes a network address for said location;
   pointing said user to the location where said content in said one of resolution types is located; and
   transmitting said content in said one of resolution types to the user.
65. The method of clause 64, wherein said network comprises a multiple resolution mechanism that includes the stored data, said multiple resolution mechanism capable of resolving said content retrieval request to determine the resolution type of the content requested.
66. The method of clause 65, wherein content retrieval request is in a predetermined syntax, said predetermined syntax allowing parsing of the content retrieval request, said parsing enabling the multiple resolution mechanism for resolving the content requested by said user.
67. The method of clause 66, wherein said predetermined syntax is in the form of Servicel @10.YYYY/ZZZZ, wherein Servicel identifies resolution type of content requested by the user, 10 identifies a system being used to request and retrieve the content, YYYY identifies an entity that owns rights to the content, and ZZZZ identifies the content.
68. The method of clause 65, wherein the content may be obtained a plurality of vendors.
69. The method of clause 68, wherein said predetermined syntax is in the form of Servicel. XXXX@10.YYYY/ZZZZ, wherein Servicel identifies resolution type of content requested by the user, XXXX identifies one of said plurality of vendors, 10 identifies a system being used to request and retrieve the content, YYYY identifies an entity that owns rights to the content, and ZZZZ identifies the content.
70. A system for using a computer to access information, comprising:
   means to receive an unique, persistent, and universal name identifier message from a user;
   means to determine that the message is enhanced with a syntax that allows for selection of an appropriate associated resolution address from an enhanced directory that maintains unique, persistent, and universal name identifiers and multiple locations for information associated with the unique, persistent, and universal name identifiers;
   means to query a directory that maintains unique, persistent, and universal name identifiers and locations for information associated with the unique, persistent, and universal name identifiers for query results based on the received unique, persistent, and universal name identifier, if the message is un-enhanced;
   means to query the enhanced directory for query results based on the received unique, persistent, and universal name identifier, if the message is enhanced ;
   means to select the appropriate associated resolution address from the query results of the enhanced directory for selection results based on the enhanced message syntax, if the enhanced directory was queried;
   means to send the query results to the user, if the enhanced directory was queried; and
   means to send the selection results to the user, if the appropriate associated resolution address from the enhanced directory was selected.
71. The system of clause 70, wherein the selection is appropriate when the message's enhanced syntax matches an entry in enhanced directory records.
72. The system of clause 70, wherein the unique, persistent, and universal name identifier is a digital object identifier.
73. The system of clause 70, wherein the syntax specifies a selection target entry in an enhanced unique, persistent, and universal name identifier directory.
74. The system of clause 70, wherein the syntax specifies a target for selection.
75. The system of clause 73, wherein the syntax specifies a parameter for the target.
76. The system of clause 74, wherein the syntax specifies a parameter for the target.
77. A system for using a computer to access information, comprising:
   means to generate a unique, persistent, and universal name identifier for information;
   means to specify an enhanced syntax for the unique, persistent, and universal name identifier including, a plurality of alphanumeric labels that serve as selection targets and fields;
   means to specify at least one location where the information that is associated with the unique, persistent, and universal name identifier may be accessed;
   means to associate specified locations with the labels; and
   means to send the unique, persistent, and universal name identifier, the labels, and the associated specified locations to a directory that maintains unique, persistent, and universal name identifiers and locations for information associated with the unique, persistent, and universal name identifiers.
78. The system of clause 77, further comprising: means to receive unique, persistent, and universal name identifier, the labels, and the associated specified locations at the directory.
79. The system of clause 78, further comprising : means to create a record in a database for the unique, persistent, and universal name identifier including fields for the labels for storing the associated specified locations.
80. The system of clause 77, wherein the unique, persistent, and universal name identifier is a digital object identifier.
81. A system for using a computer to access information, comprising: means to query an enhanced directory that maintains unique, persistent, and universal name identifiers and multiple locations for information associated with the unique, persistent, and universal name identifiers based on criteria; and m, bans to receive query results from the enhanced directory based on the query criteria.
82. The system of clause 81, wherein the criteria includes an unique, persistent, and universal name identifier with an enhanced syntax that allows for selection of an appropriate associated resolution address.
83. The system of clause 81, wherein the criteria includes metadata.
84. The system of clause 81, wherein the unique, persistent, and universal name identifier is a digital object identifier.
85. The system of clause 81, wherein the syntax specifies a selection target entry in an enhanced unique, persistent, and universal name identifier directory.
86. The system of clause 81, wherein the syntax specifies a target for selection.
87. The system of clause 85, wherein the syntax specifies a parameter for the target.
88. The system of clause 86, wherein the syntax specifies a parameter for the target.
89. A system for using a computer to access information, comprising: means to receive a query from a user at an enhanced directory that maintains enhanced unique, persistent, and universal name identifiers and multiple locations for information associated with the enhanced unique, persistent, and universal name identifiers based on criteria; means to select a record matching the query with an associated resolution address for selection results from a database containing enhanced unique, persistent, and universal name identifiers and locations for information associated with the enhanced unique, persistent, and universal name identifiers, wherein the enhanced directory includes a database maintaining a plurality of alphanumeric labels that serve as selection targets and fields that store locations where the information that is associated with the enhanced unique, persistent, and universal name identifier may be accessed; and means to send selection result to the user from the enhanced directory based on the query criteria.
90. The system of clause 89, wherein the criteria includes an unique, persistent, and universal name identifier with an enhanced syntax that allows for selection of an appropriate associated resolution address.
91. The system of clause 89, wherein the criteria includes metadata.
92. The system of clause 89, wherein the unique, persistent, and universal name identifier is a digital object identifier.
93. The system of clause 89, wherein the syntax specifies a selection target entry in an enhanced unique, persistent, and universal name identifier directory.
94. The system of clause 89, wherein the syntax specifies a target for selection.
95. The system of clause 93, wherein the syntax specifies a parameter for the target.
96. The system of clause 94, wherein the syntax specifies a parameter for the target.
97. The system of clause 95, wherein the syntax specifies a parameter for the target.
98. A system for using a computer to access information, comprising: means to query an enhanced directory that maintains unique, persistent, and universal name identifiers and multiple locations for information associated with the unique, persistent, and universal name identifiers based on criteria; means to receive query results from the enhanced directory based on the query criteria means to modify the results for a specified enhanced unique, persistent, and universal name identifier obtained with the received query results, wherein the enhanced unique, persistent, and universal name identifier includes an enhanced syntax that further including: a plurality of alphanumeric labels that serve as selection targets and fields, at least one location where information that is associated with the enhanced unique, persistent, and universal name identifier may be accessed; and means to send the modification to the enhanced directory for storage for the specified enhanced unique, persistent, and universal name identifier.
99. The system of clause 98, wherein the criteria includes an unique, persistent, and universal name identifier with an enhanced syntax that allows for selection of an appropriate associated resolution address.
100. The system of clause 98, wherein the modification includes changes to any criteria.
101. The system of clause 100, wherein the criteria includes metadata.
102. The system of clause 98, wherein the unique, persistent, and universal name identifier is a digital object identifier.
103. The system of clause 98, wherein the syntax specifies a selection target entry in an enhanced unique, persistent, and universal name identifier directory.
104. The system of clause 98, wherein the syntax specifies a target for selection.
105. The system of clause 102, wherein the syntax specifies a parameter for the target.
106. The system of clause 103, wherein the syntax specifies a parameter for the target.
107. A system for using a computer to access information, comprising: means to receive a request to modify a record for a specified enhanced unique, persistent, and universal name identifier with modified criteria, wherein the request includes an enhanced syntax that further includes : a plurality of alphanumeric labels that serve as selection targets and fields, at least one location where information that is associated with the enhanced unique, persistent, and universal name identifier may be accessed; means to modify the record for the specified enhanced unique, persistent, and universal name identifier with the modified criteria.
108. The system of clause 107, wherein the unique, persistent, and universal name identifier is a digital object identifier.
109. The system of clause 107, wherein the syntax specifies a selection target entry in an enhanced unique, persistent, and universal name identifier directory.
110. The system of clause 107, wherein the syntax specifies a target for selection.
111. The system of clause 110, wherein the syntax specifies a parameter for the target.
112. The system of clause 111, wherein the syntax specifies a parameter for the target.
113. The system of clause 107, wherein the criteria includes an unique, persistent, and universal name identifier with an enhanced syntax that allows for specification of an appropriate associated resolution address.
114. The system of clause 107, wherein the modification includes changes to any criteria.
115. The system of clause 114, wherein the criteria includes metadata.
116. A system for creating a multiple resolution mechanism, comprising: means to receive a first location for a first content, wherein said first content is retrievable from said first location; means to receive first metadata for said first content, wherein said first metadata provides descriptive data regarding said first content; means to catalog said first location and said first metadata for said first content so that said first content can be identified by providing said first metadata; means to receive a second location for a second content, wherein said second content is retrievable from said second location; means to receive second metadata for said second content, wherein said second metadata provides descriptive data regarding said second content; and means to catalog said second location and said second metadata for said second content so that said second content can be identified by providing said second metadata, wherein the multiple resolution mechanism is capable of receiving a content retrieval request from a user, parsing said content retrieval request to determine the contest requested, and appropriately transmitting one of said first content and said second content to said user is response to said content retrieval request.
117. The medium of clause 116, wherein said first content is in first resolution type and said second content is in second resolution type, wherein said content retrieval request comprises a request for one of said first content and said second content.
118. The medium of clause 117, wherein said content retrieval request is in a predetermined syntax, said predetermined syntax allowing parsing of the content' retrieval request, said parsing enabling the multiple resolution mechanism to determine the request for one of said first content and said second content.
119. The medium of clause 118, wherein said predetermined syntax is in the form of Service@10.YYYY/ZZZZ, wherein Servicel identifies resolution type of content requested by the user, 10 identifies a system being used to request and retrieve the content, YYYY identifies an entity that owns rights to the content, and ZZZZ identifies the content.
120. The medium of clause 119, wherein said resolution type may be one said first resolution type and said second resolution type.
121. The medium of clause 118, wherein the content may be obtained a plurality of vendors.
122. The medium of clause 120, wherein said predetermined syntax is in the form of Servicel. XXXX@10.YYYY/ZZZZ, wherein Servicel identifies resolution type of content requested by the user, XXXX identifies one of said plurality of vendors, 10 identifies a system being used to request and retrieve the content, YYYY identifies an entity that owns rights to the content, and ZZZZ identifies the content.
123. The medium of clause 122, wherein said resolution type may be one said first resolution type and said second resolution type.
124. The medium of clause 117, wherein said first content is identical to said second content.
125. A system for retrieving content over a network, said network having a multiple resolution mechanism, comprising: means to transmit a content retrieval request to the multiple resolution mechanism for a desired content, said desired content available in multiple resolutions, wherein said content retrieval request is in a predetermined syntax, said predetermined syntax comprising a notation to denote the desired resolution for the content, wherein said predetermined syntax allows the multiple resolution mechanism to parse the content retrieval request for determining the desired resolution for the content; and means to receive said content in said desired resolution.
126. The system of clause 125, wherein said predetermined syntax is in the form of Servicel@10.YYYY/ZZZZ, wherein Service1 identifies resolution type of content requested by the user, 10 identifies a system being used to request and retrieve the content, YYYY identifies an entity that owns rights to the content, and ZZZZ identifies the content.
127. The system of clause 125, wherein the content may be obtained a plurality of vendors.
128. The system of clause 127, wherein said predetermined syntax is in the form of Servicel.XXXX@;10.YYYY/ZZZZ, wherein Servicel identifies resolution type of content requested by the user, XXXX identifies one of said plurality of vendors, 10 identifies a system being used to request and retrieve the content, YYYY identifies an entity that owns rights to the content, and ZZZZ identifies the content.
129. A system for transmitting content over a network to a user, wherein said content is available in more than one resolution types, comprising: means to receive a content retrieval request from a user, said content retrieval request denoting content desired by the user, said content retrieval request further denoting one of said resolution types for said content; means to parse said content retrieval request to resolve the content requested by said user, wherein said content retrieval request includes one of said resolution types for the content requested; means to compare said content retrieval request against stored data; means to determine a location on the network where the content in said one of resolution types is located, wherein said stored data includes a network address for said location; means to point said user to the location where said content in said one of resolution types is located; and means to transmit said content in said one of resolution types to the user.
130. The system of clause 129, wherein said network comprises a multiple resolution mechanism that includes the stored data, said multiple resolution mechanism capable of resolving said content retrieval request to determine the resolution type of the content requested.
131. The system of clause 130, wherein content retrieval request is in a predetermined syntax, said predetermined syntax allowing parsing of the content retrieval request, said parsing enabling the multiple resolution mechanism for resolving the content requested by said user.
132. The system of clause 130, wherein the content may be obtained a plurality of vendors.
133. The system of clause 131, wherein said predetermined syntax is in the form of Servicel@10.YYYY/ZZZZ, wherein Servicel identifies resolution type of content requested by the user, 10 identifies a system being used to request and retrieve the content, YYYY identifies an entity that owns rights to the content, and ZZZZ identifies the content.
134. The system of clause 133, wherein said predetermined syntax is in the form of Servicel.XXXX@10.YYYY/ZZZZ, wherein Servicel identifies resolution type of content requested by the user, XXXX identifies one of said plurality of vendors, 10 identifies a system being used to request and retrieve the content, YYYY identifies an entity that owns rights to the content, and ZZZZ identifies the content.
135. A program stored on a medium readable by a processor, the program, comprising: a module to receive an unique, persistent, and universal name identifier message from a user; a module to determine that the message is enhanced with a syntax that allows for selection of an appropriate associated resolution address from an enhanced directory that maintains unique, persistent, and universal name identifiers and multiple locations for information associated with the unique, persistent, and universal name identifiers; a module to query a directory that maintains unique, persistent, and universal name identifiers and locations for information associated with the unique, persistent, and universal name identifiers for query results based on the received unique, persistent, and universal name identifier, if the message is un-enhanced; a module to query the enhanced directory for query results based on the received unique, persistent, and universal name identifier, if the message is enhanced; a module to select the appropriate associated resolution address from the query results of the enhanced directory for selection results based on the enhanced message syntax, if the enhanced directory was queried; a module to send the query results to the user, if the enhanced directory was queried; and a module to send the selection results to the user, if the appropriate associated resolution address from the enhanced directory was selected.
136. The medium of clause 135, wherein the selection is appropriate when the message's enhanced syntax matches an entry in enhanced directory records.
137. The medium of clause 135, wherein the unique, persistent, and universal name identifier is a digital object identifier.
138. The medium of clause 135, wherein the syntax specifies a selection target entry in an enhanced unique, persistent, and universal name identifier directory.
139. The medium of clause 135, wherein the syntax specifies a target for selection.
140. The medium of clause 138, wherein the syntax specifies a parameter for the target.
141. The medium of clause 139, wherein the syntax specifies a parameter for the target.
142. A program stored on a medium readable by a processor, the program, comprising: a module to generate a unique, persistent, and universal name identifier for information ; a module to specify an enhanced syntax for the unique, persistent, and universal name identifier including, a plurality of alphanumeric labels that serve as selection targets and fields ; a module to specify at least one location where the information that is associated with the unique, persistent, and universal name identifier may be accessed; a module to associate specified locations with the labels; and a module to send the unique, persistent, and universal name identifier, the labels, and the associated specified locations to a directory that maintains unique, persistent, and universal name identifiers and locations for information associated with the unique, persistent, and universal name identifiers.
143. The medium of clause 142, further comprising: a module to receive the unique, persistent, and universal name identifier, the labels, and the associated specified locations at the directory.
144. The medium of clause 143, further comprising: a module to create a record in a database for the unique, persistent, and universal name identifier including fields for the labels for storing the associated specified locations.
145. The medium of clause 142, wherein the unique, persistent, and universal name identifier is a digital object identifier.
146. A program stored on a medium readable by a processor, the program, comprising : a module to query an enhanced directory that maintains unique, persistent, and universal name identifiers and multiple locations for information associated with the unique, persistent, and universal name identifiers based on criteria; and a module to receive query results from the enhanced directory based on the query criteria.
147. The medium of clause 146, wherein the criteria includes an unique, persistent, and universal name identifier with an enhanced syntax that allows for selection of an appropriate associated resolution address.
148. The medium of clause 146, wherein the criteria includes metadata.
149. The medium of clause 146, wherein the unique, persistent, and universal name identifier is a digital object identifier.
150. The medium of clause 146, wherein the syntax specifies a selection target entry in an enhanced unique, persistent, and universal name identifier directory.
151. The medium of clause 146, wherein the syntax specifies a target for selection.
152. The medium of clause 150, wherein the syntax specifies a parameter for the target.
153. The medium of clause 151, wherein the syntax specifies a parameter for the target.
154. A program stored on a medium readable by a processor, the program, comprising: a module to receive a query from user at an enhanced directory that maintains enhanced unique, persistent, and universal name identifiers and multiple locations for information, associated with the enhanced unique, persistent, and universal, name identifiers based on criteria; a module to select a record matching the query with an associated resolution address for selection results from a database containing enhanced unique, persistent, and universal name identifiers and locations for information associated with the enhanced unique, persistent, and universal name identifiers, wherein the enhanced directory includes a database maintaining a plurality of alphanumeric labels that serve as selection targets and fields that store locations where the information that is associated with the enhanced unique, persistent, and universal name identifier may be accessed; and a module to send selection results to the user from the enhanced directory based on the query criteria.
155. The medium of clause 154, wherein the criteria includes an unique, persistent, and universal name identifier with an enhanced syntax that allows for selection of an appropriate associated resolution address.
156. The medium of clause 154, wherein the criteria includes metadata.
157. The medium of clause 154, wherein the unique, persistent, and universal name identifier is a digital object identifier.
158. The medium of clause 154, wherein the syntax specifies a selection target entry in an enhanced unique, persistent, and universal name identifier directory.
159. The medium of clause 154, wherein the syntax specifies a target for selection.
160. The medium of clause 158, wherein the syntax specifies a parameter for the target.
161. The medium of clause 159, wherein the syntax specifies a parameter for the target.
162. The medium of clause 160, wherein the syntax specifies a parameter for the target.
163. A program stored on a medium readable by a processor, the program, comprising: a module to query an enhanced directory hat maintains unique, persistent, and universal name identifiers and multiple locations for information associated with the unique, persistent, and universal name identifiers based on criteria; a module to receive query result from the enhanced directory based on the query criteria a module to modify the results for a specified enhanced unique, persistent, and universal name identifier obtained with the received query results, wherein the enhanced unique, persistent, and universal name identifier includes an enhanced syntax that further including: a plurality of alphanumeric labels that serve as selection targets and fields, at least one location where information that is associated with the enhanced unique, persistent, and universal name identifier may be accessed; and a module to send the modification to the enhanced directory for storage for the specified enhanced unique, persistent, and universal name identifier.
164. The medium of clause 163, wherein the criteria includes an unique, persistent, and universal name identifier with an enhanced syntax that allows for selection of an appropriate associated resolution address.
165. The medium of clause 163, wherein the modification includes changes to any criteria.
166. The medium of clause 165, wherein the criteria includes metadata.
167. The medium of clause 163, wherein the unique, persistent, and universal name identifier is a digital object identifier.
168. The medium of clause 163, wherein the syntax specifies a selection target entry in an enhanced unique, persistent, and universal name identifier directory.
169. The medium of clause 163, wherein the syntax specifies a target for selection.
170. The medium of clause 167, wherein the syntax specifies a parameter for the target.
171. The medium of clause 168, wherein the syntax specifies a parameter for the target.
172. A program stored on a medium readable by a processor, the program, comprising: a module to receive a request to modify a record for a specified enhanced unique, persistent, and universal name identifier with modified criteria, wherein the request includes an enhanced syntax that further includes: a plurality of alphanumeric labels that serve as selection targets and fields, at least one location where information that is associated with the enhanced unique, persistent, and universal name identifier may be accessed; a module to modify the record for the specified enhanced unique, persistent, and universal name identifier with the modified criteria.
173. The medium of clause 172, wherein the unique, persistent, and universal name identifier is a digital object identifier.
174. The medium of clause 172, wherein the syntax specifies a selection target entry in an enhanced unique, persistent, and universal name identifier directory.
175. The medium of clause 172, wherein the syntax specifies a target for selection.
176. The medium of clause 175, wherein the syntax specifies a parameter for the target.
177. The medium of clause 176, wherein the syntax specifies a parameter for the target.
178. The medium of clause 172, wherein the criteria includes an unique, persistent, and universal name identifier with an enhanced syntax that allows for specification of an appropriate associated resolution address.
179. The medium of clause 172, wherein the modification includes changes to any criteria.
180. The medium of clause 179, wherein the criteria includes metadata.
181. A program stored on a medium readable by a processor, the program, comprising : a module to receive a first location for a first content, wherein said first content is retrievable from said first location; a module to receive first metadata for said first content, wherein said first metadata provides descriptive data regarding said first content; a module to catalog said first location and said first metadata for said first content so that said first content can be identified by providing said first metadata; a module to receive a second location for a second content, wherein said second content is retrievable from said second location ; a module to receive second metadata for said second content, wherein said second metadata provides descriptive data regarding said second content; and a module to catalog said second location and said second metadata for said second content so that said second content can be identified by providing said second metadata, wherein the multiple resolution mechanism is capable of receiving a content retrieval request from a user, parsing said content retrieval request to determine the contest requested, and appropriately transmitting one of said first content and said second content to said user is response to said content retrieval request.
182. The medium of clause 181, wherein said first content is in first resolution type and said second content is in second resolution type, wherein said content retrieval request comprises a request for one of said first content and said second content.
183. The medium of clause 182, wherein said content retrieval request is in a predetermined syntax, said predetermined syntax allowing parsing of the content retrieval request, said parsing enabling the multiple resolution mechanism to determine the request for one of said first content and said second content.
184. The medium of clause 183, wherein said predetermined syntax is in the form of Servicel@10.YYYY/ZZZZ, wherein Servicel identifies resolution type of content requested by the user, 10 identifies a system being used to request and retrieve the content, YYYY identifies an entity that owns rights to the content, and ZZZZ identifies the content.
185. The medium of clause 184, wherein said resolution type may be one said first resolution type and said second resolution type.
186. The medium of clause 183, wherein the content may be obtained a plurality of vendors.
187. The medium of clause 185, wherein said predetermined syntax is in the form of Servicel. XXXX@10.YYYY/ZZZZ, wherein Servicel identifies resolution type of content requested by the user, XXXX identifies one of said plurality of vendors, 10 identifies a system being used to request and retrieve the content, YYYY identifies an entity that owns rights to the content, and ZZZZ identifies the content.
188. The medium of clause 187, wherein said resolution type may be one said first resolution type and said second resolution type.
189. The medium of clause 182, wherein said first content is identical to said second content.
190. A program stored on a medium readable by a processor, the program, comprising : a module to transmit a content retrieval request to the multiple resolution mechanism for a desired content, said desired content available in multiple resolutions, wherein said content retrieval request is in a predetermined syntax, said predetermined syntax comprising a notation to denote the desired resolution for the content, wherein said predetermined syntax allows the multiple resolution mechanism to parse the content retrieval request for determining the desired resolution for the content; and a module to receive said content in said desired resolution.
191. The medium of clause 190, wherein said predetermined syntax is in the form of Servicel@10.YYYY/ZZZZ, wherein Servicel identifies resolution type of content requested by the user, 10 identifies a system being used to request and retrieve the content, YYYY identifies an entity that owns rights to the content, and ZZZZ identifies the content.
192. The medium of clause 190, wherein the content may be obtained a plurality of vendors.
193. The medium of clause 192, wherein said predetermined syntax is in the form of Servicel.XXXX@10.YYYY/ZZZZ, wherein Servicel identifies resolution type of content requested by the user, XXXX identifies one of said plurality of vendors, 10 identifies a system being used to request and retrieve the content, YYYY identifies an entity that owns rights to the content, and ZZZZ identifies the content.
194. A program stored on a medium readable by a processor, the program, comprising : a module to receive a content retrieval request from a user, said content retrieval request denoting content desired by the user, said content retrieval request further denoting one of said resolution types for said content; a module to parse said content retrieval request to resolve the content requested by said user, herein said content retrieval request includes one of said resolution types for the content requested; a module to compare said content retrieval request against stored data; a module to determine a location on the network where the content in said one of resolution types is located, wherein said stored data includes a network address for said location; a module to point said user to the location where said content in said one of resolution types is located; and a module to transmit said content in said one of resolution types to the user.
195. The medium of clause 194, wherein said network comprises a multiple resolution mechanism that includes the stored data, said multiple resolution mechanism capable of resolving said content retrieval request to determine the resolution type of the content requested.
196. The medium of clause 195, wherein content retrieval request is in a predetermined syntax, said predetermined syntax allowing parsing of the content retrieval request, said parsing enabling the multiple resolution mechanism for resolving the content requested by said user.
197. The medium of clause 195, wherein the content may be obtained a plurality of vendors.
198. The medium of clause 196, wherein said predetermined syntax is in the form of Servicel@10.YYYY/ZZZZ, wherein Servicel identifies resolution type of content requested by the user, 10 identifies a system being used to request and retrieve the content, YYYY identifies an entity that owns rights to the content, and ZZZZ identifies the content.
199. The medium of clause 198, wherein said predetermined syntax is in the form of Servicel. XXXX@10.YYYY/ZZZZ, wherein Servicel identifies resolution type of content requested by the user, XXXX identifies one of said plurality of vendors, 10 identifies a system being used to request and retrieve the content, YYYY identifies an entity that owns rights to the content, and ZZZZ identifies the content.
200. An apparatus, comprising: a processor; a memory, communicatively connected to the processor; a program, stored in the memory, including, a module to receive an unique, persistent, and universal name identifier, message from a user; a module to determine that the message is enhanced with a syntax that allows for selection of an appropriate associated resolution address from an enhanced directory that maintains unique, persistent, and universal name identifiers and multiple locations for information associated with the unique, persistent, and universal name identifiers; a module to query a directory that maintains unique, persistent, and universal name identifiers and locations for information associated with the unique, persistent, and universal name identifiers for query results based on the received unique, persistent, and universal name identifier, if the message is un-enhanced; a module to query the enhanced directory for query results based on the received unique, persistent, and universal name identifier, if the message is enhanced ; a module to select the appropriate associated resolution address from the query results of the enhanced directory for selection results based on the enhanced message syntax, if the enhanced directory was queried; a module to send the query results to the user, if the enhanced directory was queried; and a module to send the selection results to the user, if the appropriate associated resolution address from the enhanced directory was selected.
201. The apparatus of clause 200, wherein the selection is appropriate when the message's enhanced syntax matches an entry in enhanced directory records.
202. The apparatus of clause 200, wherein the unique, persistent, and universal name identifier is a digital object identifier.
203. The apparatus of clause 200, wherein the syntax specifies a selection target entry in an enhanced unique, persistent, and universal name identifier directory.
204. The apparatus of clause 200, wherein the syntax specifies a target for selection.
205. The apparatus of clause 203, wherein the syntax specifies a parameter for the target.
206. The apparatus of clause 204, wherein the syntax specifies a parameter for the target.
207. An apparatus, comprising: a processor; a memory, communicatively connected to the processor; a program, stored in the memory, including, a module to generate a unique, persistent, and universal name identifier for information, a module to specify an enhanced syntax for the unique, persistent, and universal name identifier including, a plurality of alphanumeric labels that serve as selection targets and fields; a module to specify at least one location where the information that is associated with the unique, persistent, and universal name identifier may be accessed; a module to associate specified locations with the labels; and a module to send the unique, persistent, and universal name identifier, the labels, and the associated specified locations to a directory that maintains unique, persistent, and universal name identifiers and locations for information associated with the unique, persistent, and universal name identifiers.
208. The apparatus of clause 207, further comprising: a module to receive the unique, persistent, and universal name identifier, the labels, and the associated specified locations at the directory.
209. The apparatus of clause 208, further comprising: a module to create a record in a database for the unique, persistent, and universal name identifier including fields for the labels for storing the associated specified locations.
210. The apparatus of clause 207, wherein the unique, persistent, and universal name identifier is a digital object identifier.
211. An apparatus, comprising: a processor; a memory, communicatively connected to the processor; a program, stored in the memory, including, a module to query an enhanced directory that maintains unique, persistent, and universal name identifiers and multiple locations for information associated with the unique, persistent, and universal name identifiers based on criteria; and a module to receive query results from the enhanced directory based on the query criteria.
212. The apparatus of clause 211, wherein the criteria includes an unique, persistent, and universal name identifier with an enhanced syntax that allows for selection of an appropriate associated resolution address.
213. The apparatus of clause 211, wherein the criteria includes metadata.
214. The apparatus of clause 211, wherein the unique, persistent, and universal name identifier is a digital object identifier.
215. The apparatus of clause 211, wherein the syntax specifies a selection target entry in an enhanced unique, persistent, and universal name identifier directory.
216. The apparatus of clause 211, wherein the syntax specifies a target for selection.
217. The apparatus of clause 215, wherein the syntax specifies a parameter for the target.
218. The apparatus of clause 216, wherein the syntax specifies a parameter for the target.
219. An apparatus, comprising: a processor; a memory, communicatively connected to the processor; a program, stored in the memory, including, a module to receive a query from a user at an enhanced directory that maintains enhanced unique, persistent, and universal name identifiers and multiple locations for information associated with the enhanced unique, persistent, and universal name identifiers based on criteria; a module to select a record matching the query with an associated resolution address for selection results from a database containing enhanced unique, persistent, and universal name identifiers and locations for information associated with the enhanced unique, persistent, and universal name identifiers, wherein the enhanced directory includes a database maintaining a plurality of alphanumeric labels that serve as selection targets and fields that store locations where the information that is associated with the enhanced unique, persistent, and universal name identifier may be accessed; and a module to send selection results to the user from the enhanced directory based on the query criteria.
220. The apparatus of clause 219, wherein the criteria includes an unique, persistent, and universal name identifier with an enhanced syntax that allows for selection of an appropriate associated resolution address.
221. The apparatus of clause 219, wherein the criteria includes metadata.
222. The apparatus of clause 219, wherein the unique, persistent, and universal name identifier is a digital object identifier.
223. The apparatus of clause 219, wherein the syntax specifies a selection target entry in an enhanced unique, persistent, and universal name identifier directory.
224. The apparatus of clause 219, wherein the syntax specifies a target for selection.
225. The apparatus of clause 223, wherein the syntax specifies a parameter for the target.
226. The apparatus of clause 224, wherein the syntax specifies a parameter for the target.
227. The apparatus of clause 225, wherein the syntax specifies a parameter for the target.
228. An apparatus, comprising: a processor; a memory, communicatively connected to the processor; a program, stored in the memory, including, a module to query an enhanced directory that maintains unique, persistent, and universal name identifiers and multiple locations for information associated with the unique, persistent, and universal name identifiers based on criteria; a module to receive query results from the enhanced directory based on the query criteria a module to modify the results for a specified enhanced unique, persistent, and universal name identifier obtained with the received query results, wherein the enhanced unique, persistent, and universal name identifier includes an enhanced syntax that further including: a plurality of alphanumeric labels that serve as selection targets and fields, at least one location where information that is associated with the enhanced unique, persistent, and universal name identifier may be accessed; and a module to send the modification to the enhanced directory for storage for the specified enhanced unique, persistent, and universal name identifier.
229. The apparatus of clause 228, wherein the criteria includes an unique, persistent, and universal name identifier with an enhanced syntax that allows for selection of an appropriate associated resolution address.
230. The apparatus of clause 228, wherein the modification includes changes to any criteria.
231. The apparatus of clause 230, wherein the criteria includes metadata.
232. The apparatus of clause 228, wherein the unique, persistent, and universal name identifier is a digital object identifier.
233. The apparatus of clause 228, wherein the syntax specifies a selection target entry in an enhanced unique, persistent, and universal name identifier directory.
234. The apparatus of clause 228, wherein the syntax specifies a target for selection.
235. The apparatus of clause 232, wherein the syntax specifies a parameter for the target.
236. The apparatus of clause 233, wherein the syntax specifies a parameter for the target.
237. An apparatus, comprising: a processor; a memory, communicatively connected to the processor; a program, stored in the memory, including, a module to receive a request to modify a record for a specified enhanced unique, persistent, and universal name identifier with modified criteria, wherein the request includes an enhanced syntax that further includes: a plurality of alphanumeric labels that serve as selection targets and fields, at least one location where information that is associated with the enhanced unique, persistent, and universal name identifier may be accessed; a module to modify the record for the specified enhanced unique, persistent, and universal name identifier with the modified criteria.
238. The apparatus of clause 237, wherein the unique, persistent, and universal name identifier is a digital object identifier.
239. The apparatus of clause 237, wherein the syntax specifies a selection target entry in an enhanced unique, persistent, and universal name identifier directory.
240. The apparatus of clause 237, wherein the syntax specifies a target for selection.
241. The apparatus of clause 240, wherein the syntax specifies a parameter for the target.
242. The apparatus of clause 241, wherein the syntax specifies a parameter for the target.
243. The apparatus of clause 237, wherein the criteria includes an unique, persistent, and universal name identifier with an enhanced syntax that allows for specification of an appropriate associated resolution address.
244. The apparatus of clause 237, wherein the modification includes changes to any criteria.
245. The apparatus of clause 244, wherein the criteria includes metadata.
246. An apparatus, comprising: a processor; a memory, communicatively connected to the processor; a program, stored in the memory, including, s, a module to receive a first location for a first content, wherein said' first content is retrievable from said first location; a module to receive first metadata for said first content, wherein said first metadata provides descriptive data regarding said first content; a module to catalog said first location and said first metadata for said first content so that said first content can be identified by providing said first metadata; a module to receive a second location for a second content, wherein said second content is retrievable from said second location; a module to receive second metadata for said second content, wherein said second metadata provides descriptive data regarding said second content; and a module to catalog said second location and said second metadata for said second content so that said second content can be identified by providing said second metadata, wherein the multiple resolution mechanism is capable of receiving a content retrieval request from a user, parsing said content retrieval request to determine the contest requested, and appropriately transmitting one of said first content and said second content to said user is response to said content retrieval request.
247. The apparatus of clause 246, wherein said first content is in first resolution type and said second content is in second resolution type, wherein said content retrieval request comprises a request for one of said first content and said second content.
248. The apparatus of clause 247, wherein said content retrieval request is in a predetermined syntax, said predetermined syntax allowing parsing of the content retrieval request, said parsing enabling the multiple resolution mechanism to determine the request for one of said first content and said second content.
249. The apparatus of clause 248, wherein said predetermined syntax is in the form of Servicel@10.YYYY/ZZZZ, wherein Servicel identifies resolution type of content requested by the user, 10 identifies a system being used to request and retrieve the content, YYYY identifies an entity that owns rights to the content, and ZZZZ identifies the content.
250. The apparatus of clause 249, wherein said resolution type may be one said first resolution type and said second resolution type.
251. The apparatus of clause 248, wherein the content may be obtained a plurality of vendors.
252. The apparatus of clause 250, wherein said predetermined syntax is in the form of Servicel. XXXX@10.YYYY/ZZZZ, wherein Servicel identifies resolution type of content requested by the user, XXXX identifies one of said plurality of vendors, 10 identifies a system being used to request and retrieve the content, YYYY identifies an entity that owns rights to the content, and ZZZZ identifies the content.
253. The apparatus of clause 252, wherein said resolution type may be one said first resolution type and said second resolution type.
254. The apparatus of clause 247, wherein said first content is identical to said second content.
255. An-apparatus, comprising: a processor; a memory, communicatively connected to the processor; a program, stored in the memory, including, a module to transmit a content retrieval request to the multiple resolution mechanism for a desired content, said desired content available in multiple resolutions, wherein said content retrieval request is in a predetermined syntax, said predetermined syntax comprising a notation to denote the desired resolution for the content, wherein said predetermined syntax allows the multiple resolution mechanism to parse the content retrieval request for determining the desired resolution for the content ; and a module to receive said content in said desired resolution.
256. The apparatus of clause 255, wherein said predetermined syntax is in the form of Servicel @10.YYYY/ZZZZ, wherein Servicel identifies resolution type of content requested by the user, 10 identifies a system being used to request and retrieve the content, YYYY identifies an entity that owns rights to the content, and ZZZZ identifies the content.
257. The apparatus of clause 255, wherein the content may be obtained a plurality of vendors.
258. The apparatus of clause 257, wherein said predetermined syntax is in the form of Servicel. XXXX@10.YYYY/ZZZZ, wherein Servicel identifies resolution type of content requested by the user, XXXX identifies one of said plurality of vendors, 10 identifies a system being used to request and retrieve the content, YYYY identifies an entity that owns rights to the content, and ZZZZ identifies the content.
259. An apparatus, comprising: a processor; a memory, communicatively connected to the processor; a program, stored in the memory, including, a module to receive a content retrieval request from a user, said content retrieval request denoting content desired by the user, sad content retrieval request further denoting one of said resolution types for said content; a module to parse said content retrieval request to resolve the content requested by said user, wherein said content retrieval request includes one of said resolution types for the content requested; a module to compare said content retrieval request against stored data; a module to determine a location on the network where the content in said one of resolution types is located, wherein said stored data includes a network address for said location; a module to point said user to the location where said content in said one of resolution types is located; and a module to transmit said content in said one of resolution types to the user.
260. The apparatus of clause 259, wherein said network comprises a multiple resolution mechanism that includes the stored data, said multiple resolution mechanism capable of resolving said content retrieval request to determine the resolution type of the content requested.
261. The apparatus of clause 260, wherein content retrieval request is in a predetermined syntax, said predetermined syntax allowing parsing of the content retrieval request, said parsing enabling the multiple resolution mechanism for resolving the content requested by said user.
262. The apparatus of clause 260, wherein the content may be obtained a plurality of vendors.
263. The apparatus of clause 261, wherein said predetermined syntax is in the form of Servicel@10.YYYY/ZZZZ, wherein Servicel identifies resolution type of content requested by the user, 10 identifies a system being used to request and retrieve the content, YYYY identifies an entity that owns rights to the content, and ZZZZ identifies the content.
264. The apparatus of clause 263, wherein said predetermined syntax is in the form of Servicel.XXXX@10.YYYY/ZZZZ, wherein Servicel identifies resolution type of content requested by the user, XXXX identifies one of said plurality of vendors, 10 identifies a system being used to request and retrieve the content, YYYY identifies an entity that owns rights to the content, and ZZZZ identifies the content.

## Claims

1. A method of using a computer to access information, comprising:
receiving a query from a user at an enhanced directory that maintains enhanced unique, persistent, and universal name identifiers and multiple locations for information associated with the enhanced unique, persistent, and universal name identifiers based on criteria;
selecting a record matching the query with an associated resolution address for selection results from a database containing enhanced unique, persistent, and universal name identifiers and locations for information associated with the enhanced unique, persistent, and universal name identifiers,
wherein the enhanced directory includes a database maintaining a plurality of alphanumeric labels that serve as selection targets and fields that store locations where the information that is associated with the enhanced unique, persistent, and universal name identifier may be accessed; and
sending selection results to the user from the enhanced directory based on the query criteria.

2. The method of claim 1, wherein the criteria includes an unique, persistent, and universal name identifier with an enhanced syntax that allows for selection of an appropriate associated resolution address.

3. The method of claim 1, wherein the criteria includes metadata.

4. The method of claim 1, wherein the syntax specifies a selection target entry in an enhanced unique, persistent, and universal name identifier directory.

5. The method of claim 1, wherein the syntax specifies a target for selection.

6. The method of claim 5, wherein the syntax specifies a parameter for the target.

7. A method of creating a multiple resolution mechanism, comprising:
receiving a first location for a first content, wherein said first content is retrievable from said first location;
receiving first metadata for said first content, wherein said first metadata provides descriptive data regarding said first content;
cataloging said first location and said first metadata for said first content so that said first content can be identified by providing said first metadata;
receiving a second location for a second content, wherein said second content is retrievable from said second location;
receiving second metadata for said second content, wherein said second metadata provides descriptive data regarding said second content; and
cataloging said second location and said second metadata for said second content so that said second content can be identified by providing said second metadata,
wherein the multiple resolution mechanism is capable of receiving a content retrieval request from a user, parsing said content retrieval request to determine the contest requested, and appropriately transmitting one of said first content and said second content to said user is response to said content retrieval

8. The method of claim 7, wherein said first content is in first resolution type and said second content is in second resolution type, wherein said content retrieval request comprises a request for one of said first content and said second content.

9. The method of claim 8, wherein said content retrieval request is in a predetermined syntax, said predetermined syntax allowing parsing of the content retrieval request, said parsing enabling the multiple resolution mechanism to determine the request for one of said first content and said second content.

10. The method of claim 9, wherein said predetermined syntax is in the form of Servicel@10.YYYY/ZZZZ, wherein Servicel identifies resolution type of content requested by the user, 10 identifies a system being used to request and retrieve the content, YYYY identifies an entity that owns rights to the content, and ZZZZ identifies the content.

11. The method of claim 10, wherein said predetermined syntax is in the form of Service1. XXXX@10.YYYY/ZZZZ, wherein Servicel identifies resolution type of content requested by the user, XXXX identifies one of said plurality of vendors, 10 identifies a system being used to request and retrieve the content, YYYY identifies an entity that owns rights to the content, and ZZZZ identifies the content.

12. The method of claim 10 or claim 11, wherein said resolution type may be one said first resolution type and said second resolution type.

13. The method of claim 8, wherein said first content is identical to said second content.

14. A method of transmitting content over a network to a user, wherein said content is available in more than one resolution types, comprising:
receiving a content retrieval request from a user, said content retrieval request denoting content desired by the user, said content retrieval request further denoting one of said resolution types for said content;
parsing said content retrieval request to resolve the content requested by said user, wherein said content retrieval request includes one of said resolution types for the content requested;
comparing said content retrieval request against stored data;
determining a location on the network where the content in said one of resolution types is located, wherein said stored data includes a network address for said location;
pointing said user to the location where said content in said one of resolution types is located; and
transmitting said content in said one of resolution types to the user.

15. The method of claim 14, wherein said network comprises a multiple resolution mechanism that includes the stored data, said multiple resolution mechanism capable of resolving said content retrieval request to determine the resolution type of the content requested.

16. The method of claim 15, wherein content retrieval request is in a predetermined syntax, said predetermined syntax allowing parsing of the content retrieval request, said parsing enabling the multiple resolution mechanism for resolving the content requested by said user.

17. The method of claim 16, wherein said predetermined syntax is in the form of Servicel @10.YYYY/ZZZZ, wherein Servicel identifies resolution type of content requested by the user, 10 identifies a system being used to request and retrieve the content, YYYY identifies an entity that owns rights to the content, and ZZZZ identifies the content.

18. The method of claim 15, wherein said predetermined syntax is in the form of Servicel.XXXX@10.YYYY/ZZZZ, wherein Servicel identifies resolution type of content requested by the user, XXXX identifies one of said plurality of vendors, 10 identifies a system being used to request and retrieve the content, YYYY identifies an entity that owns rights to the content, and ZZZZ identifies the content.

19. A program stored on a medium readable by a processor, the program comprising instructions to implement the method of any preceding claim.

20. A system or apparatus arranged to perform the method of any of claims 1 to 18.
